# EUROPEAN PATENT APPLICATION

(11) **EP 4 738 235 A1**
(43) Date of publication of application: **06.05.2026**
(21) Application number: 24832121.8
(22) Date of filing: 28.06.2024
(51) Int. Cl.: G06Q 50/26, G06F 16/635, G06F 21/64, G06Q 10/48, G06Q 30/06

(54) **IDENTITY MANAGEMENT SYSTEM, IDENTITY MANAGEMENT METHOD, AND PROGRAM**

(30) Priority: 29.06.2023 JP 2023107259; 23.08.2023 JP 2023135662
(71) Applicant: Toppan Holdings Inc., Tokyo 110-0016 (JP)
(72) Inventor: KOIKE Yuko, Tokyo 110-0016 (JP); TAMURA Gen, Tokyo 110-0016 (JP); KANEYAMA Chihiro, Tokyo 110-0016 (JP)
(74) Representative: Hoffmann Eitle
(86) International application number: PCT/JP2024/023581
(87) International publication number: WO 2025/005264

(57) **Abstract**

The present invention is an identity management system comprising a qualification management unit which causes a memory unit to store a prescribed plurality of pieces of qualification information in association with an information storage medium owned by a real user, said plurality of pieces of qualification information being from among: one or more pieces of qualification information that are assigned to an identity serving as the real user existing in a physical space and that indicate that the user has a prescribed qualification; and one or more pieces of qualification information that are assigned to an identity serving as an avatar that corresponds to the real user and can exist in the metaverse.

## Description

### [Technical Field]

The present invention relates to an identity management system, an identity management method, and program. The present application is based on and claims the benefits of priorities from Japanese Patent Application Nos. 2023-107259 and 2023-135662 respectively filed in Japan on June 29, 2023 and Aug. 23, 2023, the contents of which are incorporated herein by reference.

### [Background Art]

There is known technology in which avatars in a digital space can perform actions such as purchasing digital objects in response to user operations (see, for example, PTL 1).

### [Citation List]

### [Patent Literature]

[PTL 1] JP 2022-117111 A

### [Summary of the Invention]

### [Problem to be Solved by the Invention]

When real users act in the physical space or when avatars representing those real users or other users act in the digital space, various types of authentication (i.e., proof of identity, proof of meeting certain requirements, proof of authority, etc.) are required in various situations, and the type of such required authentication may vary. Considering such situations, it is desirable to efficiently manage qualifications related to the existence (identity) of real users, avatars, etc.

Each real user existing in the physical space has a different personality. In addition, avatars existing in digital spaces (metaverse) that correspond to real users will also differ in personality depending on the personality of the corresponding real users and their previous actions in the digital space. With consideration of such differences, if information about the characteristics of identities such as real users and avatars can be effectively utilized in the identity activity space, it will be desirable to improve interest and convenience.

The purpose of the present invention is to enable efficient management of qualifications related to identities and to enable effective utilization of the characteristics of identities in the identity activity space.

### [Solution to Problem]

A first mode of the present invention which is to realize the foregoing object relates to an identity management system, including a qualification management unit that stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user, the user having a predetermined qualification; and one or more pieces of qualification information being assigned to an identity serving as an avatar which is allowed to exist in a metaverse and corresponds to the real user.

A second mode of the present invention relates to the identity management system according to the first mode, wherein the qualification information includes identification information that proves a status of the identity.

A third mode of the present invention relates to the identity management system according to the first mode or the second mode, wherein the qualification information includes authenticity proof information that proves authenticity of the identity.

A fourth mode of the present invention relates to the identity management system according to any one of the first to third modes, wherein the qualification management unit outputs qualification information serving as information for confirming an identity to be confirmed, the qualification information being selected from the qualification information stored in the memory unit, based on an operation performed by the real user on a corresponding user terminal.

A fifth mode of the present invention relates to an identity management method, the method comprising: a qualification management step, wherein a qualification management unit stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user, the user having a predetermined qualification; and one or more pieces of qualification information being assigned to an identity serving as an avatar which is allowed to exist in a metaverse and corresponds to the real user.

A sixth mode of the present invention relates to a program performed by a computer installed in an identity management system, wherein the computer is worked as a qualification management unit that stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user, the user having a predetermined qualification; and one or more pieces of qualification information being assigned to an identity serving as an avatar which is allowed to exist in a metaverse and corresponds to the real user.

A seventh mode of the present invention which is for realizing the foregoing object relates to an identity management system, including: a storage unit that stores identity-specific information, the identity-specific information corresponding to an identity of a real user existing in a physical space and an identity of an avatar that is allowed to exist in a metaverse, the identity-specific information being specific to the identities, and a feature word processing unit that, based on a content of the identity-specific information stored in the memory unit, identity by identity, extracts feature words, identifies a relationship between the feature words, and generates a feature-word relationship information indicating the identified relationship.

An eighth mode of the present invention relates to the identity management system according to the seventh mode, wherein the feature word processing unit performs scoring of the feature words based on the identity-specific information when extracting the feature word.

A ninth mode of the present invention relates to the identity management system according to the seventh mode or the eighth mode, wherein the feature word processing unit generates feature-word relationship display information for visualizing and presenting a relationship between the feature words indicated by the feature-word relationship information.

A tenth mode of the present invention relates to the identity management system according to the ninth mode, wherein the feature word processing unit processes a result of the scoring of the feature words such that the result of the scoring is shown in a predetermined mode in the feature-word relationship display information.

An eleventh mode of the present invention relates to the identity management system according to the seventh to tenth modes, wherein the feature word processing unit generates, for each identity, a plurality of pieces of feature-word relationship information corresponding to characteristics of the respective identities which are different from each other.

A twelfth mode of the present invention relates to the identity management system according to the seventh to eleventh modes, wherein the feature word processing unit generates integrated feature-word relationship information which is made by integrating a plurality of pieces of feature-word relationship information.

A thirteenth mode of the present invention relates to the identity management system according to the eleventh mode, wherein the feature word processing unit reconstructs an integrated feature-word relationship information from a plurality of pieces of feature-word relationship information which is partly selected from the plurality of pieces of feature-word relationship information which are used to generate the integrated feature-word relationship information.

A fourteenth mode of the present invention relates to the identity management system according to the seventh to thirteenth modes, further including a matching unit which determines matching among the plurality of identities, based on a similarity condition provided by the feature-word relationship information associated to every plurality of identities that have been matched.

A fifteenth mode of the present invention relates to the identity management system according to the fourteenth mode, wherein the feature word processing unit generates the integrated feature-word relationship information which is provided by integrating the feature-word relationship information, for every identity matched by the matching unit.

A sixteenth mode of the present invention relates to an identity management method performed in an identity management system, wherein a feature word processing unit comprises a feature word processing step, wherein the feature word processing unit performs, for each identity, extraction of feature words and determination of a relationship between the feature words and generates feature-word relationship information indicating the determined relationship, based on a content of an identity-specific information stored in a memory unit, the identity-specific information corresponding and being specific to the identities which correspond to both an identity serving as a real user who exists in a physical space and an identity serving as an avatar which is allowed to exist in a metaverse.

A seventeenth mode of the present invention relates to a program, the program enabling a computer installed in an identity management system as a feature word processing unit, wherein the feature word processing unit performs, for each identity, extraction of feature words and determination of a relationship between the feature words and generates feature-word relationship information indicating the determined relationship, based on a content of an identity-specific information stored in a memory unit, the identity-specific information corresponding and being specific to the identities which correspond to both an identity serving as a real user who exists in a physical space and an identity serving as an avatar which is allowed to exist in a metaverse.

### [Advantageous Effect of Invention]

According to the present invention, the management of qualifications related to identity can be performed efficiently, thereby enabling the characteristics of identities to be effectively utilized in the activity space of identities.

### [Brief Description of Drawings]

Fig. 1 exemplifies the overall configuration of an avatar management system according to the first embodiment.
Fig. 2 exemplifies the configuration of an avatar generation system according to the present embodiment.
Fig. 3 is a view pictorially showing a flow of avatar generation according to the present embodiment.
Fig. 4 is a diagram exemplifying the configuration of an avatar management device according to the present embodiment.
Fig. 5 is an illustration exemplifying end-user information according to the present embodiment.
Fig. 6 is a diagram exemplifying avatar information according to the present embodiment.
Fig. 7 is a diagram exemplifying a metafile according to the present embodiment.
Fig. 8 is a diagram exemplifying information stored, corresponding to a real user, in a user VC memory unit according to the present embodiment.
Fig. 9 is a diagram exemplifying information stored, corresponding to a real user, in an avatar VC memory unit according to the present embodiment.
Fig. 10 is a structural diagram exemplifying issuer information according to the present embodiment.
Fig. 11 is a structural diagram exemplifying wallet management information according to the present embodiment.
Fig. 12 is a sequence chart exemplifying processing steps performed by the avatar management system according to the present embodiment, in relation to generation and registration of an avatar and registration of avatar authentication information.
Fig. 13 is a diagram exemplifying qualification information management according to the present embodiment.
Fig. 14A is a view exemplifying operation steps on an end-user terminal for age authentication of a real user in the present embodiment.
Fig. 14B is a view exemplifying operation steps on the end-user terminal for age authentication of the real user in the present embodiment.
Fig. 14C is a view exemplifying operation steps on the end-user terminal for age authentication of the real user in the present embodiment.
Fig. 15 is a sequence chart exemplifying processing steps executed by the user-end terminal and the avatar management device, which is for the age confirmation of the real user in the present embodiment.
Fig. 16 is a sequence chart exemplifying processing steps executed by the user-end terminal, the avatar management device and the service provision system, which is for the qualification confirmation of the avatar in the present embodiment.
Fig. 17 is a diagram exemplifying the overall configuration of an identity management system according to a second embodiment.
Fig. 18 is a diagram exemplifying the configuration of an avatar generation system according to the present embodiment.
Fig. 19 is an illustration pictorially showing a flow of avatar generation according to the present embodiment.
Fig. 20 is a diagram exemplifying a hardware configuration of the identity management device according to the present embodiment.
Fig. 21 is a diagram exemplifying a functional configuration of the identity management device according to the present embodiment.
Fig. 22 is a diagram exemplifying end-user information according to the present embodiment.
Fig. 23 is a diagram exemplifying avatar information according to the present embodiment.
Fig. 24 is a diagram exemplifying a metafile according to the present embodiment.
Fig. 25 is a diagram exemplifying information stored in the user VC memory unit according to the present embodiment, corresponding to each avatar.
Fig. 26 is a diagram exemplifying information stored in the avatar VC memory unit according to the present embodiment, corresponding to each real user.
Fig. 27 is a diagram exemplifying the structure of wallet management information in the present embodiment.
Fig. 28 is a diagram exemplifying the structure of identity history information in the present embodiment.
Fig. 29 is a diagram exemplifying the structure of issuer information in the present embodiment.
Fig. 30 is a sequence chart exemplifying processing steps performed by the identity management system according to the present embodiment, in relation to generation and registration of an avatar and registration of avatar authentication information.
Fig. 31 is a diagram which exemplifies wall management modes adopted in the present embodiment.
Fig. 32 is a view exemplifying an identity management screen in the present embodiment.
Fig. 33 is an illustration exemplifying display modes of characteristic expressions exemplified in the present embodiment.
Fig. 34 is another illustration exemplifying display modes of characteristic expressions exemplified in the present embodiment.
Fig. 35 is a flowchart exemplifying processing steps executed by the identity management device according to the present embodiment in relation to generation of characteristic expression information.
Fig. 36 shows flowcharts exemplifying processing steps executed by the service provision system and the identity management device, which are according to the present embodiment, in relation to displaying identity characteristic graphs.
Fig. 37 is a flowchart exemplifying processing steps executed by the identity management device according to the present embodiment in relation to matching identities.

### [Description of the Embodiments]

### <First Embodiment>

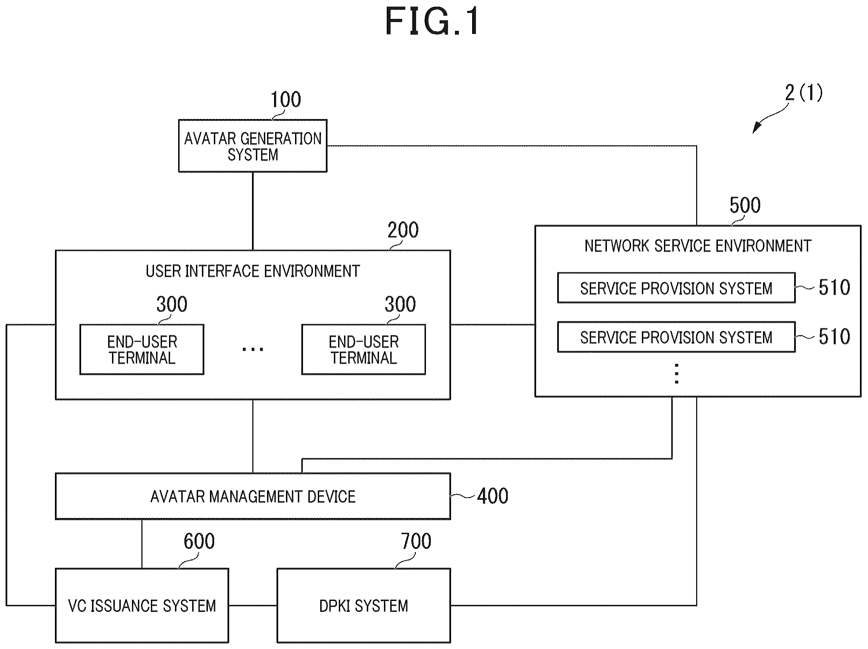

Fig. 1 shows an overall configuration example of an avatar management system (which is an example of a qualification management system) 2 according to the present embodiment. The avatar management system (an example of a qualification management system) 2 is included in an identity management system 1. The avatar management system 2 according to the present embodiment is provided with, as components thereof, an avatar generation system 100, a user interface environment 200, an avatar management device 400, a network service environment 500, a VC (Verifiable Credentials: identity certification information) issuance system 600, and a DPKI system 700. The connections among the components serving as these systems are made via networks.

The avatar generation system 100 is a system that generates avatars used in the network service environment 500.

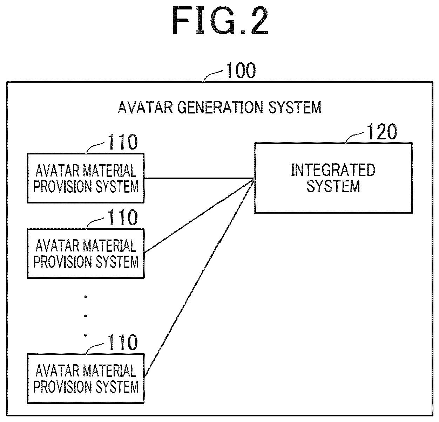

Fig. 2 exemplifies the configuration of the avatar generation system 100. The avatar generation system 100 shown in the foregoing figure is provided with multiple avatar material provision systems 110 and a single integrated system 120.

The respective avatar material provision systems 110 are provided as systems that generate specified avatar materials, of the avatar materials that constitute an avatar, and provide the generated avatar materials. The avatar material provision systems 110 may, for example, be operated by respective avatar material providers (companies).

The integrated system 120 generates an avatar by acquiring necessary avatar materials from among the avatar materials provided by the avatar material provision system 110 and integrating (combining) the acquired avatar materials.

In the avatar generation system 100, the avatar material provision systems 110 and the integrated system 120 may be connected via a network.

In addition, the number of avatar material provision systems 110 implemented in the avatar generation system 100 can be one or more and is not limited to a specific number thereof. In addition, the number of integrated systems 120 can be one or more and is not limited to a specific number.

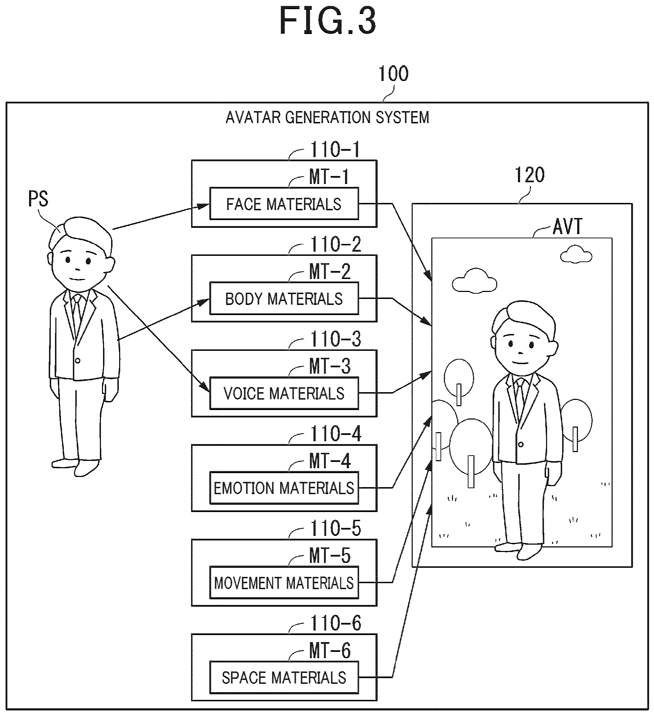

Fig. 3 schematically shows the flow of avatar generation adopted by the avatar generation system 100. Avatars to be generated in the present embodiment may be, for example, two-dimensional or three-dimensional (3D) characters or others, or a three-dimensional real avatar provided such as a human being. The foregoing figure is exemplified as a case where a real avatar imitating a three-dimensional human being is generated. The real avatar is an avatar that realistically reproduces the appearance of an actual person PS based on information obtained by photographing an original person PS.

In the avatar generation system 100 shown in the foregoing figure, an example is shown that has six avatar material provision systems 110-1 to 110-6.

The avatar material provision system 110-1 generates 3D face (head) materials as avatar materials and provides the generated face materials MT-1.

The avatar material provision system 110-2 generates body materials MT-2 as avatar materials and provides the generated body materials MT-2. The body materials MT-2 in the current embodiment refer to parts of the human body excluding the head. In addition, the avatar material provision system 110-2 may generate body materials MT-2 with clothing worn thereon.

The avatar material provision system 110-3 generates voice materials MT-3 as avatar materials and provides the generated voice materials MT-3. The voice materials MT-3 are materials of voices sounded from the avatars.

The avatar material provision system 110-4 generates emotion materials MT-4 as avatar materials and provides the generated emotion materials MT-4. The emotion materials MT-4 contains information that changes expressions of materials such as face materials and movements of body materials MT-2, according to prescribed emotions. Use of the emotion materials MT-4 enables emotional expression of the avatars.

The avatar material provision system 110-5 generates movement materials MT-5 as avatar materials and provides the generated movement materials MT-5. The movement materials MT-5 include information that provides movements to the avatars. For example, if an avatar appears as a weather forecaster in weather forecast web contents, the movement materials MT-5 generated for the weather forecaster can be used to provide the avatar with movements corresponding to the movements performed by the weather forecaster, such as pointing to a weather map.

The avatar material provision system 110-6 generates space materials MT-6 as avatar materials and provides the generated space materials MT-6. The space materials MT-6 are provided as materials that represent the space in which avatars exist.

In the avatar generation system 100 shown in Fig. 3, the avatar material provision system 110-1 captures a source person PS and generates face materials MT-1 for the person PS. In addition, the avatar material provision system 110-2 captures the source person PS and generates the body materials MT-2 of the person PS. In addition, the avatar material provision system 110-3 uses data recorded from the voice of the source person PS to generate voice materials MT-3.

Accordingly, the integrated system 120 acquires the avatar materials (face materials MT-1, body materials MT-2, voice materials MT-3, emotion materials MT-4, movement materials MT-5, and space materials MT-6) generated by the respective avatar material provision systems 110-1 to 110-6. The integrated system 120 generates an avatar AVT by integrating the acquired avatar materials.

The avatar AVT may be generated without using all of the avatar materials (face materials, body materials, voice materials, emotion materials, movement materials, and space materials) shown in the foregoing figure. In other words, the avatar AVT may be generated using part of the avatar materials shown in the foregoing figure, for example. The avatar materials used to generate avatars may be changed depending on the network service where the generated avatars are used, the environment of a metaverse where the avatars exist, and other factors.

The explanation will be returned to Fig. 1. The user interface environment 200 is an environment that provides a user interface to end users who use the network service environment 500. Specifically, the user interface environment 200 includes one or more end-user terminals 300 which are set to correspond, respectively, to one or more end users.

The end-user terminal 300 is a terminal used by end users to receive network services provided by the network service environment 500.

Every respective end-user terminal 300 is connected to the service provision systems 510 in response to end-user operations and can output applications and content corresponding to network services provided by the connected service provision systems 510 by display, voice, or other means.

The end-user terminals 300 may be a personal computer, smartphone, tablet device, or other devices.

In the following explanation, an end user may be referred to as a "real user." The "real user" is a term used to refer to end users as user-related entities that exist in the physical space and is contrasted with an avatar that corresponds to the end user and exists in a digital space as the same user-related entities.

The avatar management device 400 manages avatars. Specifically, as part of the avatar management, the avatar management device 400 stores, as objects to be managed, avatars generated by the avatar generation system 100. The avatar management device 400 uploads, into the network service environment 500, the avatars stored as the objects to be managed. The network service environment 500 provides end users with network services which use the avatars provided by the network service environment 500.

In addition, the avatar management device 400 enables authentication of the avatars by providing authenticity proof information to the avatars to be managed.

In addition, the avatar management device 400 determines the authenticity of the avatar that is the subject of the inquiry in response to an authenticity inquiry (authenticity confirmation request) regarding the avatar used in the network service provided to the end-user terminal 300, and sends a determination result to the end-user terminal 300.

In addition, the avatar management device 400 enables the VC issuance system 600 to issue information (serving as avatar identification information) to be used as an identification certificate used for the identification of the avatar being managed. The avatar management device 400 is able to manage the avatars by storing therein the issued avatar identification information.

Specifically, the avatar management device 400 sends the avatar identification information of the avatar to be authenticated, to the network service that requested authentication in response to an avatar authentication request from the network service in the network service environment 500. In this process, the avatar management device 400 is able to sign (digitally sign) the identification information to be transmitted, using a secret key associated with the target avatar (that is, the information to be transmitted is encrypted).

In addition, the avatar management device 400 may manage a wallet (an example of an information storage medium). The wallet according to the present embodiment includes a wallet for storing assets in a cryptocurrency environment and may also include a wallet for managing credential information (authenticity proof information, identification information (VC)) of real users or avatars associated with, for example, one end user. Furthermore, the wallet may also include wallets used for various services provided by the platform operator, such as payment services, and wallets used for two-dimensional code payment applications. The avatar management device 400 may be configured to manage wallet data using a blockchain.

The network service environment 500 is an environment that provides one or more network services. Specifically, the network service environment 500 includes one or more service provision systems 510 that provide specified network services. The service provision systems 510 may be configured as a web server or application server constructed according to the contents of the network services to be provided.

The network services provided by the service provision systems 510 may include websites utilizing avatars, network games, and web conferencing systems. In addition, the network services that utilize avatars may include those that allow avatars to exist in a three-dimensional digital space called a metaverse and to act within the metaverse. Specifically, for example, the network services include services such as marketplaces where avatars can purchase goods at stores in the metaverse, services that enable direct trading between avatars in the metaverse, and services that allow celebrities and specific characters to exist in the metaverse. Moreover, the network services may include, for example, weather forecasts provided by avatars acting as weather forecasters, medical consultations provided by avatars acting as doctors, and fortune-telling services provided by avatars acting as fortune-tellers.

Furthermore, the service provision system 510 may be configured to provide multiple network services. The service provision system 510 that provides a metaverse as a network service may provide multiple metaverses.

The VC issuance system 600 is a system that issues identification information in response to issuance requests. The VC issuance system 600 may be configured by one or more devices connected to a network, for example.

The VC issuance system 600 according to the present embodiment is capable of issuing identification information that proves the status of an end user (real user), as well as identification information that proves the status of an avatar itself to be managed by the avatar management device 400.

The VC issuance system 600 may issue multiple bits of identification information respectively corresponding to multiple different issuers (issuers).

The VC issuance system 600 is able to issue identification information (public identification information) of public issuers. The public issuer is an issuer that serves as, for example, an agency operated by the government, an agency authorized by the government, or an agency with a certain level of social credibility. Specifically, public issuers include, for example, institutions that issue licenses based on specified qualifications, approved companies, educational institutions, local governments, and financial institutions. For example, the public identification information used for payments in the metaverse may be issued by financial institutions serving as the issuing authorities. In addition, the public identification information required for admission to specific facilities in the metaverse may be issued by companies that operate those facilities, educational institutions, local government agencies, etc.

In addition, the VC issuance system 600 issues identification information (private identification information) for private issuers. The private issuers may include private organizations such as volunteer groups, civic sports organizations, and school clubs. The private identification information issued by such private issuers can prove, for example, that an avatar belongs to a corresponding private organization, that a certificate or license issued by the corresponding private organization has been granted to the avatar, and so on.

In addition, the private issuers may include, for example, fans (supporters) of artists.. The private identification information issued by fans of artists can be assigned to the artist's avatar, for example, to prove that the artist's avatar is supported by the fans

In addition, end users may be included as private issuers. As an example, end users acting as private issuers may issue private identification information for friend verification. Avatars with private identification information for friend verification can prove that they are friends with, for example, the avatar of the end user who is a private issuer.

In addition, the private issuer may be, for example, the operator of the service provision system 510. As an example, the service provision system 510 serving as a private issuer may issue private identification information for quality verification. The avatar for the end user to whom private identification information certifying the quality verification has been assigned can be proven to be of good standing, for example, by not engaging in misconduct in the metaverse provided by the service provision system 510.

Additionally, the private issuers may include event organizers. For example, a private issuer may issue private identification information as tickets for events held in the metaverse of a specified service provision system 510. Avatars with private identification information assigned as tickets can prove that the avatars are eligible to participate in events held in the metaverse of the specified service provision system 510.

As can be seen from the examples of the private issuers explained above, the private identification information can be used by private issuers to verify the identity of avatars or avatar-enabled users based on relationships between individuals and evaluations made by individuals.

Other examples of issuing the identification information based on relationships between individuals include private identification information provided based on connections in social network systems (SNS). In this case, this private identification information may be, for example, information that proves that a user or avatar is a friend of a private issuer's friend on an SNS.

In addition, examples of the private identification information based on individual evaluations include private identification information that can be issued based on evaluations of users (sellers, buyers) in network services where transactions between individuals take place.

In addition, as an example of the private identification information based on evaluations by other individuals, the private identification information may be issued based on credit rating information indicating a user's creditworthiness provided by a service that evaluates the creditworthiness of users given by inputting information such as user's age, gender, occupation, and purchase history.

The identification information issued by the VC issuance system 600 in the present embodiment may correspond to, for example, VC (Verifiable Credential). In the following explanation, an example is provided in which the identification information in the present embodiment corresponds to VC. For this reason, in the following explanation, the identification information issued by the VC issuance system 600 may be referred to as VC.

In the present embodiment, the identification information that proves the status of the avatar itself is described as avatar identification information (avatar VC). This distinguishes the avatar identification information from identification information that proves the status of the real user (end user) (user identification information (user VC)). When no particular distinction is made between the avatar identification information and the user identification information, the avatar identification information and the user identification information are described as identification information or VC.

The DPKI System 700 manages public keys in accordance with DPKI (Decentralized Public Key Infrastructure).

When issuing the identification information as a VC, the VC issuance system 600 according to the present embodiment generates a pair of public and private keys corresponding to the issuer DID (Decentralized Identifier), which is a DID that uniquely identifies the issuing organization. In addition, a pair of the public key and private key corresponding to the holder DID (i.e., end-user DID or avatar DID) are generated, in which the DID uniquely indicates the holder (i.e., end-user or avatar) of the identification information.

The VC issuance system 600 registers the generated public keys (the public key corresponding to the issuer DID and the public key corresponding to the holder DID). The DPKI system 700 stores the registered public keys which are made to correspond to the respective issuer DID and holder DID.

The DPKI system 700 may be configured to register public keys by storing public keys on a blockchain. In addition, the DPKI system 700 may be configured with devices serving as nodes corresponding to the blockchain that stores the public key.

When the service provision system 510 needs to prove the identification of a holder, the service provision system 510 obtains, from the DPKI system 700, the public key associated with the holder DID of the target holder. The service provision system 510 uses the acquired public key to decrypt the identification information, thereby being able to determine whether the identification information is valid (status verification).

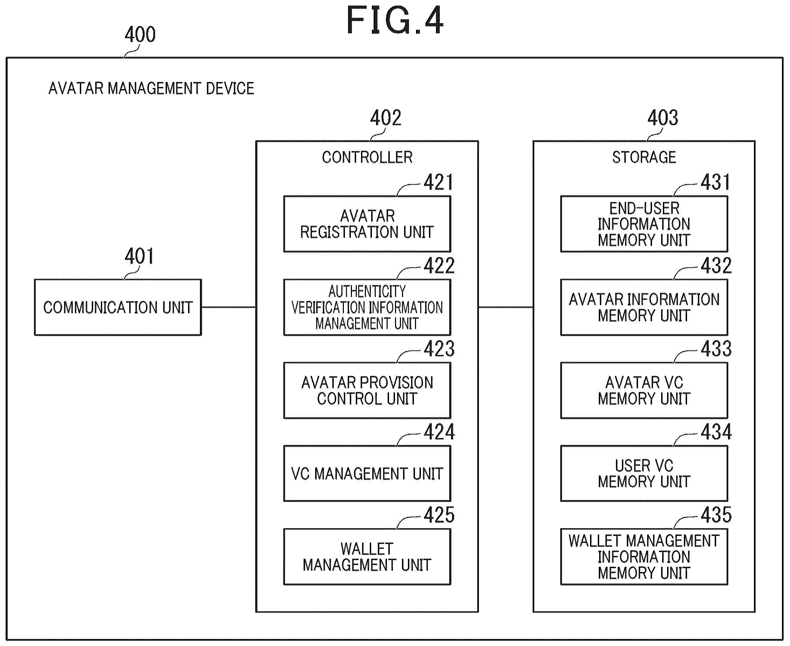

Fig. 4 exemplifies the configuration of the avatar management device 400. The functions of the avatar management device 400 shown in this figure are realized by execution of programs which are performed by the CPU (Central Processing Unit) installed in the avatar management device 400.

The avatar management device 400 shown in this figure is provided with a communication unit 401, a controller 402, and storage 403.

The communication unit 401 communicates via a network.

The controller 402 executes various control processes in the avatar management device 400. The controller 402 shown in the figure includes an avatar registration unit 421, an authenticity verification information management unit 422 (an example of a qualification management unit), an avatar provision control unit 423, a VC management unit 424 (an example of a qualification management unit), and a wallet management unit 425.

The avatar registration unit 421 registers avatars generated by the avatar generation system 100 as objects to be managed. The registration of the avatars mentioned in the current embodiment is performed by storing avatar information (described later) of the avatars to be managed, into the avatar information memory unit 432. The avatars registered by the avatar registration unit 421 can be used by a service provision system 510 installed in network service environment 500 for the network services provided by itself.

The authenticity verification information management unit 422 manages the authenticity proof information of avatars. Specifically, the authenticity verification information management unit 422 assigns authenticity proof information to avatars to be registered. The authenticity proof information will be described later.

In addition, the authenticity verification information management unit 422 may perform authenticity verification on the avatar which is subject to authenticity verification, using the authenticity proof information assigned to the registered avatar, in response to an authenticity confirmation request from the end-user terminal 300. The authenticity verification information management unit 422 may send the authenticity determination result to the end-user terminal 300 that sent the authenticity confirmation request.

The avatar provision control unit 423 executes control related to providing registered avatars to the service provision system 510 (sending avatar information). The avatar management device 400 and the respective service provision systems 510 are connected via an API, and the avatar provision control unit 423 is configured to transmit avatar data to the service provision systems 510 in an online connection state thereof.

The VC management unit 424 manages VC (identification information) of identities which are targets to be managed and exist in the physical space or the metaverse. The VCs managed by the VC management unit 424 is user identification information (user VC) corresponding to the identity of a real user and avatar identification information (avatar VC) corresponding to the identity of an avatar.

The VC management unit 424 requests the issuance of identification information for an identity (real user or avatar) to the VC issuance system 600 via the network. The VC issuance system 600 issues the identification information for the target identity in response to the request. The VC issuance system 600 transmits, to the avatar management device 400, the issued identification information and the corresponding private keys (private key corresponding to an issuer DID, private key corresponding to a holder DID). The VC management unit 424 stores, into the avatar VC memory unit 433 or the user VC memory unit 434, the transmitted identification information (avatar identification information or user identification information) and the private key in a corresponding manner.

Wallet management unit 425 manages wallets used by a real user and an avatar.

The storage 403 stores therein various information required by the avatar management device 400. The storage 403 is provided with an end-user information memory unit 431, an avatar information memory unit 432, an avatar VC memory unit 433, a user VC memory unit 434, and a wallet management information memory unit 435.

The end-user information memory unit 431 stores therein end-user information. The end-user information is defined as information about end users who have registered one or more avatars corresponding to themselves in the avatar management device 400.

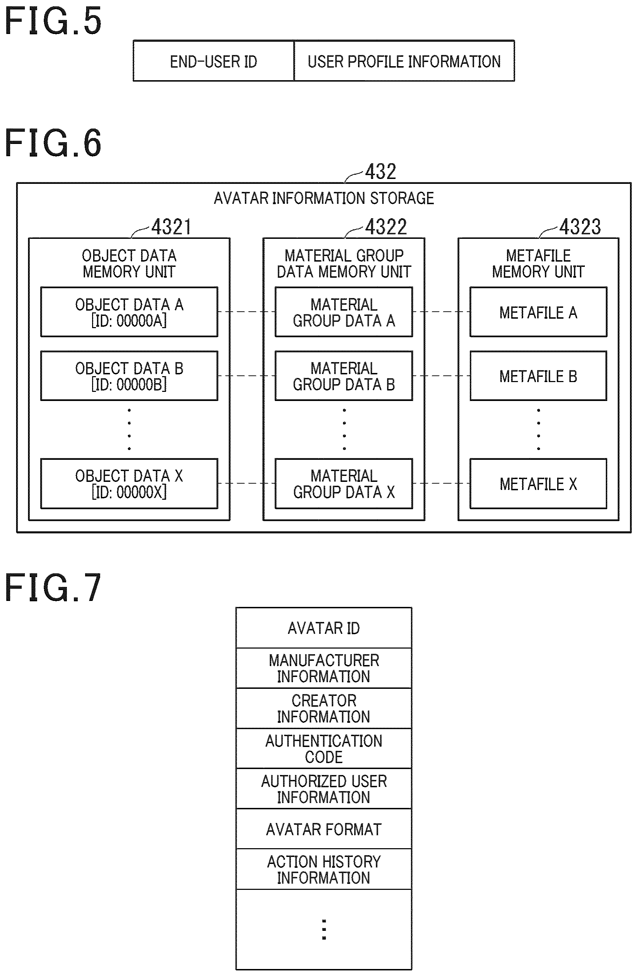

Fig. 5 exemplifies end-user information corresponding to a one end user. The end-user information in the same figure includes fields for each end-user ID and user profile information. The end-user ID field stores therein the end-user ID that uniquely identifies the corresponding end user.

The field for the user profile information stores therein the user profile information of a corresponding end user. The user profile information may include, for example, an end user's name, gender, address, etc.

The avatar information memory unit 432 stores therein avatar information.

Fig. 6 shows an example of the avatar information stored in the avatar information memory unit 432. The avatar information memory unit 432 shown in this figure includes an object data memory unit 4321, a material-group data memory unit 4322, and a metafile memory unit 4323.

The avatar information to be assigned to one avatar includes, for example, object data, material-group data, and metafiles.

The object data memory unit 4321 stores therein object data for each registered avatar.

The material-group data memory unit 4322 stores therein material-group data for each registered avatar. The metafile memory unit 4323 stores therein metafiles for each registered avatar. Among the object data memory unit 4321, material-group data memory unit 4322, and metafile memory unit 4323, the object data, material-group data, and metafiles, which are assigned to the same avatar, are set to correspond to each other by using the same avatar ID.
practically, object data A, material-group data A, and metafiles A respectively memorized in the object data memory unit 4321, the material-group data memory unit 4322, and the metafile memory unit 4323, which are directed to the avatar A, are set to correspond to each other by an avatar ID [00000A] uniquely indicating the avatar A.

The object data are actual data of an object that indicates a corresponding avatar. The object data is formed by combining components such as a head and bodies, which are generated using specified avatar materials.

The material-group data is data that contains one or more avatar materials, which are for adding specified properties to the entity of an avatar created by the object data. The material-group data may include, for example, voice materials, emotion materials, movement materials, space materials, etc. Using the material-group data, it is possible to make the avatar objects speak, change their facial expressions, move, and exist in a digital space with a predetermined design.

The metafiles contain one or more pieces of metadata that are assigned to the corresponding avatar.

Fig. 7 exemplifies a metafile to be assigned to one avatar. The metadata shown in the figure includes an avatar ID, source information, creator's information, an authentication code, authorized user information, an avatar format, and action history information.

The avatar ID is an identifier that uniquely identifies an avatar in the avatar information stored in the avatar information memory unit 432. The avatar IDs may be issued by the avatar registration unit 421 when registering corresponding avatars therein. As mentioned above, object data, material-group data, and meta files, which correspond to the same avatar, are linked by an avatar ID.

The source information is provided as information regarding the person (source) corresponding to an avatar. The source information may include information items such as a source ID and profile information of the source person. The source information may be provided by the avatar generation system 100. If the source person is an end user, the end user ID of a corresponding end user may be used as the source ID.

The creator information is provided as information about the creator of a corresponding avatar. The creator may be, for example, an organization or individual corresponding to the integrated system 120 that generated the corresponding avatar in the avatar generation system 100.

The authentication code is defined as a code issued by the avatar management device 400, corresponding to the avatar to be provided, when the service provision system 510 receives the provision of an avatar (transmission of avatar information) from the avatar management device 400.

The authorized user information is information about authorized users. The authorized user is a person who has the right to use a corresponding avatar. The authorized user may be an end user who creates an avatar. In this case, the authorized user can create an avatar based on themselves which exists in the metaverse provided by the service provision system 510, and which can act within the metaverse in response to operations on the end-user terminal 300, for example. In addition, the authorized user may be an operator or others of a specified service provision system 510. The authorized user information is information that identifies such an authorized user. Specifically, the authorized user information may be user accounts such as authorized user IDs, user names, and passwords registered by the authorized users. When the authorized user is an end user, the end user ID may be used as the authorized user ID.

In addition, the authorized user information may include not only the original authorized user (primary authorized user), such as the end user who created the avatar, but also authorized users (secondary authorized users) who have been granted usage rights.

The avatar format indicates a file format, specifications, etc. as a corresponding avatar format.

The action history information is provided as information that indicates the history of actions taken by corresponding avatars in the metaverse provided by each of the service provision systems 510. The action history information for each avatar may be obtained by, for example, the avatar provision control unit 423 from a corresponding each of the service provision systems 510.

The explanation will now be returned to Fig. 4. The avatar VC memory unit 433 stores therein avatar identification information (avatar VC) for each registered avatar. In addition, the avatar VC memory unit 433 stores therein private keys (such as private keys corresponding to issuer DIDs or private keys corresponding to avatar DIDs) associated with the avatar identification information.

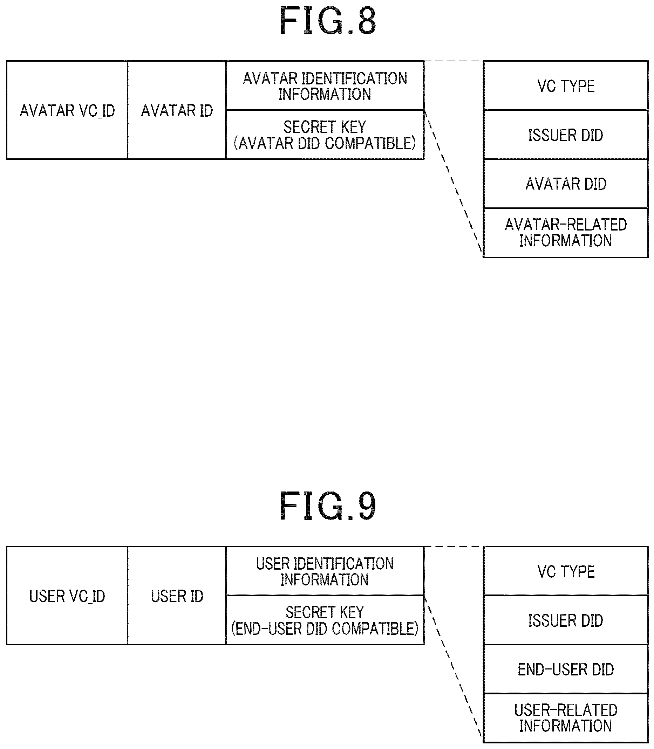

Fig. 8 shows an example of information (avatar identification information and private key) stored in the avatar VC memory unit 433, which information is assigned to a single avatar.

As shown in the foregoing figure, in the avatar VC memory unit 433, an avatar VC_ID and an avatar ID are stored in correspondence with avatar identification information and an avatar DID-associated private key. The avatar VC_ID is an identifier uniquely assigned to the corresponding avatar identification information.

In this way, the avatar identification information and the private key are associated with respective avatar IDs. Hence, this allows the avatar identification information and private key to be managed in association with the avatar information of the corresponding avatar.

The avatar identification information includes fields for a VC type, an issuer DID, an avatar DID, and an avatar-related information.

The field for the VC type is used to store information indicating the type (format) of identification information.

The field for the issuer DID is used to store an issuer DID that indicates the issuer of the avatar identification information.

The field for the avatar DID is used to store the avatar DID of the associated avatar.

The field for the avatar-related information is used to store avatar-related information for the corresponding avatar. The information contained in foregoing avatar-related information is not specifically limited, but may include, for example, information on rights and qualifications acquired by the avatar through its actions in the metaverse. In addition, the avatar-related information may also include action history information, similarly to that stored in the avatar information.

Alternatively, at least one of the avatar identification information and the private key may be stored on a blockchain under the control of the VC management unit 424 of the avatar management device 400. When both of the avatar identification information and the private key are stored in the blockchain scheme, the avatar VC memory unit 433 may be omitted from the system according to the embodiment.

The explanation will now be returned to Fig. 4. The user VC memory unit 434 stores therein user identification information (user VC) for each end user (real user) registered (stored) in the end-user information memory unit 431. In addition, the user VC memory unit 434 stores therein private keys (private keys corresponding to issuer DIDs and private keys corresponding to user DIDs) associated with the user identification information.

Fig. 9 exemplifies information (user identification information and private keys) stored in the user VC memory unit 434, which is assigned to a single real user.

As shown in the foregoing figure, in the user VC memory unit 434, user identification information and a private key associated with a user DID are stored in association with both the user VC ID and the user ID. The user VC_ID is set as an identifier uniquely assigned to the corresponding user identification information. As described, by associating the user identification information and a private key which are for the same user ID, it is possible to manage user identification information and private keys, corresponding to the user information concerning each of the actual users (end users).

The user identification information includes fields for the VC type, issuer DID, user DID, and user-related information.

The user-related information includes the real user-related information assigned to a real user. The content of the user-related information is not specifically limited. Thus, for example, information such as rights and qualifications acquired by the real user as a result of their actions in the physical space (shopping, moving to a specified location, etc.) may be included. Additionally, the user-related information may include action history information showing the actions of the real user in the real word, corresponding to the response.

Additionally, at least one of the user identification information and the private key may be stored in the blockchain under the control of the VC management unit 424 of the avatar management device 400. When the user identification information and the private key are both stored in the blockchain, the user VC memory unit 434 may be omitted from the system.

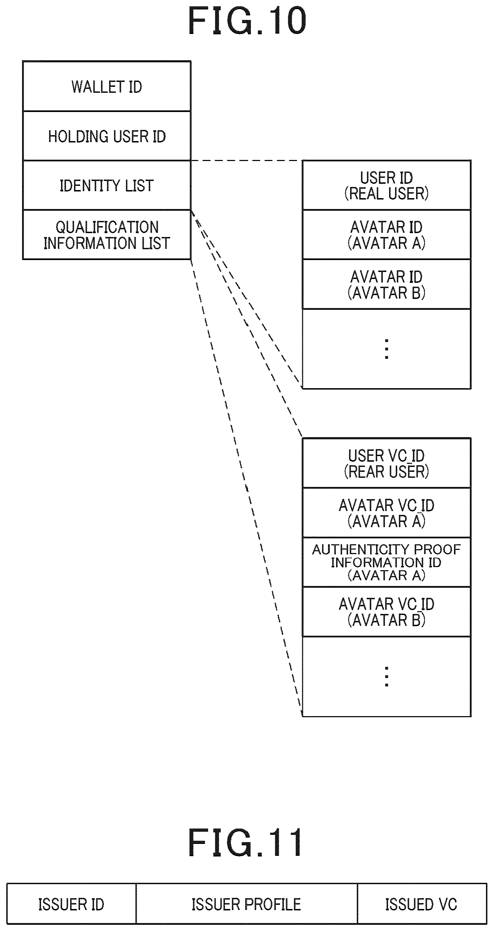

The explanation will now be returned to Fig. 4. The wallet management information memory unit 435 stores wallet management information. The wallet management information assigned to one wallet is information that is managed by integrating items of qualification information of the identity (real user, avatar) associated with one end user. Fig. 10 shows an example of wallet management information corresponding to a single wallet. The wallet management information corresponding to a single wallet has fields for a wallet ID, an identity list, and a qualification information list.

The field for the wallet ID stores therein a wallet ID, which is an identifier that uniquely identifies the corresponding wallet.

The identity list stores therein identity IDs (user IDs, avatar IDs) that indicate identities that can use the corresponding wallet.

The qualification information list stores therein qualification information IDs (user VC_IDs, avatar VC_IDs, authenticity proof information IDs, etc.) for each qualification information (VC, authenticity proof information, etc.) that can be included in the associated wallet for management thereof.

With such a structure of the wallet management information, it is possible to integrate and manage qualification information (authenticity proof information, VC, etc.) as qualification information stored in the wallet owned by a single end user, in which this qualification information is assigned to each identity (real user, avatar) assigned to the single end user. Moreover, the qualification information stored in the wallet can be shared between identities indicated by the identity IDs (user ID, avatar IDs) stored in the identity list.

In addition, the wallet management information may be stored in the blockchain under the control of the wallet management unit 425 of the avatar management device 400. In this modification, the wallet management information memory unit 435 may be omitted from the system.

Additionally, the avatar management device 400 may be configured by a single device. Also, the avatar management device 400 may be realized by assigning predetermined functions to a plurality of devices communicably connected to a network and having the plurality of devices execute processing in cooperation with each other.

In addition, the VC issuance system 600 may store a database related to issuers (issuer database).

Fig. 11 shows an example of the structure of records (issuer information) stored in the issuer database in association with one issuer. The issuer information shown in this figure includes fields for an issuer ID, an issuer profile, and an issued VC.

The issuer ID field stores therein an issuer ID of the associated issuer.

The issuer profile field stores an issuer profile. A issuer profile is information that describes the issuer profile. As shown in the foregoing figure, the issuer profile may include fields for such as issuer type and issuer name. In the field for the issuer type information indicating whether the associated issuer is a public issuer or a private issuer, for example is stored. The field for the issuer name stores therein the name of the associated issuer (issuer name).

The field for the issued VC stores information related to the identification information issued by the corresponding issuer.

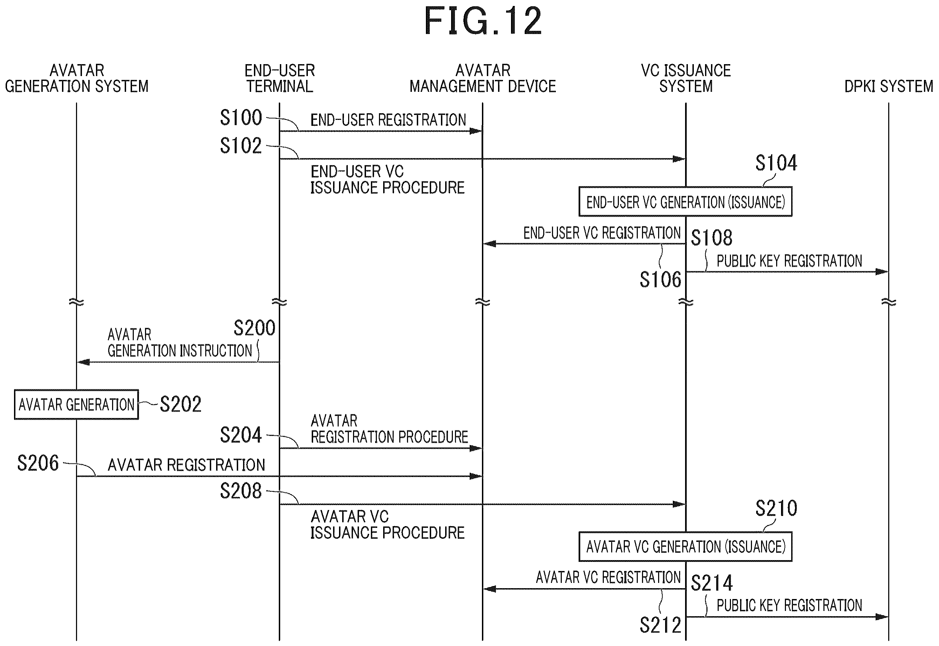

Referring to the sequence diagram shown in Fig. 12, an example of the processing steps is described which is performed by the avatar management system (qualification management system) 2 according to the present embodiment in relation to the registration (user registration) of end users (real users). The registration of an end user, which is shown in the figure, is performed to enable the end user associated with the avatar to be managed as a real user which is one of the identities.

Step S100: The end user operates the end-user terminal 300 that he or she possesses to perform the end-user registration procedure such that the end user as themselves is registered in the avatar management device 400. When performing the end-user registration procedure, the end user may enter information specified by predetermined items which are included in the user profile information, such as user's account and user's name.

The avatar management device 400 generates end-user information for the end-user registration procedure from the end-user terminal 300 and stores the generated end-user information in the end-user information memory unit 431.

Step S102: In addition, the end user may perform the procedure for issuing user identification information (user VC) associated with themselves in response to the user registration in step S100. In this case, the end user accesses the VC issuance system 600 via the end-user terminal 300 and performs the procedure for issuing user identification information (user VC) for the end user. The end-user terminal 300 executes processing corresponding to the user identification information issuance procedure in response to user's operations.

As part of the issuance procedure, the end-user terminal 300 may send an issuance request to the VC issuance system 600 together with information on specified items contained in the user profile information. In addition, the issuance request may include a request for information specifying the type of user identification information to be issued (e.g., driver's license, passport, insurance card, etc.).

Step S104: The VC issuance system 600 generates user identification information in response to the issuance request received at step S102. In this generation, the VC issuance system 600 generates (issues) a user DID indicating a corresponding end user and generates a pair of public key and private key which correspond to the user DID. In addition to this, the VC issuance system 600 signs (encrypts) the generated user identification information using the private key generated depending on the issuer DID indicating the issuance agency to which the user corresponds.

Step S106: The VC issuance system 600 registers the user identification information generated in step S104, into the avatar management device 400. Specifically, the VC issuance system 600 sends, to the avatar management device 400, both the user identification information and the private key, in which the user identification information is signed with an issuer DID-corresponding private key assigned to the corresponding issuance institution and the private key corresponds to user DID assigned to the end user. In the avatar management device 400, the VC management unit 424 stores, into the user VC memory unit 434, both the user identification information received from the VC issuance system 600 and the private key assigned to the user DID in such a manner that such user identification information and private key are associated with the avatar ID of the corresponding avatar.

Step S108: Furthermore, the VC issuance system 600 registers, into the DPKI system 700, the public keys (the issuer DID-corresponding public key and the user DID-corresponding public key) generated in step S104 together with the user identification information.

In addition, the issuance of the user identification information executed in steps S102 to S108 may be executed whenever it becomes necessary to issue new specified user identification information after the user registration has been completed.

Then, referring to the same sequence diagram in Fig. 12, in relation to the generation and registration of avatars, and the registration of avatar authentication information, how processing steps are performed by the avatar management system 2 of the present embodiment will now be described.

Step S200: The end user accesses the avatar generation system 100 by operating the end-user terminal 300 in his/her possession and performs avatar generation operations. The end-user terminal 300 sends avatar generation instructions corresponding to such avatar generation operations, to the avatar generation system 100.

Step S202: The avatar generation system executes a process to generate an avatar in accordance with the avatar generation instructions.

Step S204: The end user operates the end-user terminal 300 to perform the avatar registration procedures such that the generated avatar is registered in the avatar management device 400. In the avatar registration procedure, an avatar to be registered is specified, and the avatar management device 400 is specified as the registration destination for the specified avatar.

Step S206: In response to the avatar registration procedure performed in step S204, the avatar generation system 100 and the avatar management device 400 execute processes assigned to the avatar registration.

First, the avatar generation system 100 uploads the avatar information of the avatar designated as a registration target by the avatar registration procedure, to the avatar management device 400.

The avatar registration unit 421 of the avatar management device 400 stores the uploaded avatar information in the avatar information memory unit 432.

Moreover, in step S206, the authenticity verification information management unit 422 of the avatar management device 400 assigns authenticity proof information to an avatar that is to be registered currently.

Authenticity proof information is information that proves the authenticity of avatars themselves existing in the metaverse of the service provision system 510. In the present embodiment, the authenticity of an avatar means that the avatar is not fake or altered, and is legitimate. Examples of improper (unfair) avatars include avatars that have been altered, such as avatar materials (e.g., face materials) being replaced with fake materials that are different from the original, and avatars that are copied without the permission of a creator or other parties who hold certain rights to the avatar.

Specifically, the authenticity verification information management unit 422 may perform the following as the provision of authenticity proof information for a target avatar: provision of electronic watermarks (an example of authenticity proof information) and provision of digital authenticity certificates (an example of authenticity proof information).

The authenticity verification information management unit 422 adds, as an electronic watermark, information unique to a target avatar, such as the avatar ID, to the object data of the target avatar. The electronic watermark applied to the object data of the avatar should preferably be imperceptible, but may also be perceptible.

In addition, the authenticity verification information management unit 422 adds a digital certificate of authenticity to the target avatar.

In this addition, the authenticity verification information management unit 422 may add a certificate of authenticity to the target avatar, which certifies the creator of the target avatar, the storage location (URL) of the target avatar, the service provision system 510 that uses the target avatar, and other information.

The authenticity certificate may be issued by, for example, the authenticity verification information management unit 422 which executes a predetermined transaction with an issuer (not shown in the figure) of the authenticity certificate in the network, thereby causing the issuer to issue an authenticity certificate for the target avatar. Such authenticity certificates may be managed on the network in association with, for example, the avatar ID (an example of information unique to the registered avatar) of the target avatar.

As an example, the authenticity certificate assigned to an avatar by the authenticity verification information management unit 422 may be an NFT (Non-Fungible Token) to be managed on a blockchain. In this example, the authenticity verification information management unit 422 may be configured to grant an authenticity certificate to an avatar using, for example, an external NFT platform. In addition, the authenticity verification information management unit 422 may be configured to grant, to avatars, authenticity certificates generated using technologies such as quantum-resistant cryptography and quantum-resistant blockchain.

In addition, the authenticity certificate granted to an avatar by the authenticity verification information management unit 422 may be an SBT (Soulbound Token), which is a non-transferable NFT. In this alternative, the authenticity verification information management unit 422 may assign the SBT as authenticity proof information to an avatar instead of NFT, or may assign both NFT and SBT to an avatar. When assigning NFT and SBT as authenticity proof information to an avatar, the authenticity verification information management unit 422 may select either NFT or SBT for proving the authenticity of the avatar, or may use both NFT and SBT in combination.

In addition, in step S206, the authenticity verification information management unit 422 also issues an authentication code unique to the avatar that is the subject of the current registration. The authentication code is a code provided, together with the avatar data of a target avatar, to the service provision system 510 that provides network services using the target avatar. The authentication code is used to verify the authenticity of the avatar in response to a request from an end user, as will be described below.

Since the authentication code is uniquely associated with the target avatar, an avatar ID may be used as the authentication code, for example.

By the way, there are cases where avatars can be identified or registration information containing personal information of users can be identified. In order to strengthen security against such cases, it is preferable to use, as the authentication code, a code generated independently of the avatar ID.

The authenticity verification information management unit 422 adds the generated authentication code to the metafile stored in the metafile memory unit 4323 which corresponds to the target avatar (Fig. 7), whereby the added authentication code becomes one of the metadata.

Step S208: The end user who created the avatar registered in step S206 makes the VC issuance system 600 access to the end-user terminal 300 and then perform the procedure for issuing avatar identification information. The end-user terminal 300 executes the issuance procedure processing in accordance with the user's operations.

As part of the issuance procedure, the end-user terminal 300 may send an issuance request to the VC issuance system 600 together with the avatar information that is subjected to the avatar identification information. In addition, the issuance request may include information specifying an avatar identification information to be issued (issuance certificate specification information).

In addition, in response to the issuance request, the VC issuance system 600 may determine avatar identification information to be issued to the target avatar.

In addition, when sending the issuance request, the end-user terminal 300 may temporarily obtain avatar information from the avatar management device 400 and send the obtained avatar information to the VC issuance system 600. Alternatively, when sending the issuance request, the end-user terminal 300 may specify an avatar to be sent to the avatar management device 400, and the avatar management device 400 may send the avatar information to the VC issuance system 600.

Step S210: In response to the issuance request from the end-user terminal 300 in step S208, the VC issuance system 600 generates avatar identification information that proves the identity of the avatar based on the avatar information received together with the issuance request in step S208. In this generation, the VC issuance system 600 generates (issues) an avatar DID that indicates a corresponding avatar, and generates a pair of the public key and private key corresponding to the avatar DID. After this generation, the VC issuance system 600 signs (encrypts) the generated avatar Identification information using the private key generated corresponding to the issuer DID indicating an issuing agency to which the avatar corresponds.

The VC issuance system 600 may include at least a part of contents of the received avatar information in the identity information.

Step S212: The VC issuance system 600 registers the avatar identification information in the avatar management device 400. Specifically, the avatar identification information (an example of the signed identification information) signed with the private key assigned to the issuer DID of the issuing agency, and the private key assigned to the avatar DID of the associated avatar are sent to the avatar management device 400. The VC management unit 424 of the avatar management device 400 stores both the avatar identification information received from the VC issuance system 600 and the private key corresponding to the avatar DID into the avatar VC memory unit 433 in such a manner that the avatar identification information and the private key are associated with the avatar ID of the corresponding avatar.

Step S214: The VC issuance system 600 registers, into the DPKI system 700, the public keys (i.e., the issuer DID-corresponding public key and the avatar DID-associated public key) generated together with the avatar identification information in step S210.

In the avatar management system 2 according to the present embodiment, as described in the processing steps shown in Fig. 12, a real user and an avatar can be registered as identities corresponding to the single end user, and after the registration, qualification information can be assigned (issued) to the identities. In other words, the real user can be assigned (issued) a user identification certificate, and the avatar can be assigned avatar identification information and authenticity proof information.

Furthermore, the wallet management unit 425 of the avatar management device 400 can set a qualification information wallet WL which assigned to each end user. This wallet WL is a wallet that stores qualification information assigned to identities (real users, avatars) in an integrated manner of the qualification information.

In other words, the wallet management unit 425 assigns one wallet ID to one end user in a one-to-one correspondence manner. The wallet management unit 425 generates wallet management information corresponding to the assigned wallet ID as follows. For example, the wallet management unit 425 stores the identity IDs (i.e., the user ID and avatar ID) corresponding to each identity in the shared ID list field in association with the assigned wallet ID. In addition, the wallet management unit 425 stores the list items of qualification information assigned to the corresponding identity in the shared qualification information list field, corresponding to the assigned wallet ID. The wallet management unit 425 stores, in the wallet management information memory unit 435, the wallet management information generated in this manner. Alternatively, in the shared ID list, the identity IDs of some of the identities corresponding to all the identities of one end user may be stored. As another alternative, in the shared qualification information list, some of the qualification information selected from all pieces of the qualification information assigned to each identity corresponding to one end user may be stored.

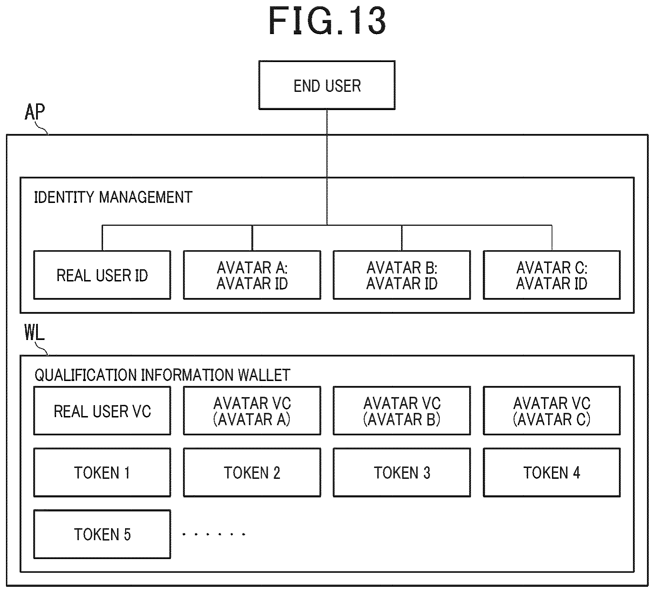

Fig. 13 shows an example of the relationship between identity and qualification information, which is managed by the wallet management information and corresponds to each end user. This figure shows an example of wallet management modes realized under the avatar management application AP installed in end-user terminal 300.

In the figure, there is shown an example in which real users and three avatars, avatar A, avatar B, and avatar C, are registered as identities that can use the qualification information wallet WL in response to end users. In other words, in the shared ID list field of the wallet management information, the user ID of the corresponding real user and the avatar IDs of the three avatars, avatar A, avatar B, and avatar C are stored.

In addition, the qualification information wallet WL assigned to the real user and the three avatars A, B, and C holds the user identification information (user VC) associated with the real user and avatar identification information (avatar VC) assigned to each of the avatars A, B, and C. Additionally, the qualification information wallet WL shown in the foregoing figure may hold authenticity proof information, such as NFTs or SBTs assigned to any of the avatars A, avatar B, and avatar C, as shown by token 1 to token 5, etc. In the fields for the shared qualification information lists about the corresponding wallet management information, these identification information (VC) and tokens (authenticity proof information) are stored. The tokens may include, as NFTs and SBTs, driver's licenses, membership cards, admission passes indicating access to specific locations, tickets indicating eligibility to participate in specific events, or others.

In the present embodiment, the qualification information wallet WL is assigned to a single end user. This makes it possible to manage, in a unified manner, the qualification information for multiple identities corresponding to the single end user.

As described above, in response to the ability to manage qualification information for multiple identities corresponding to a single end user in a unified manner, the end-user terminal 300 can present the identity and qualification information corresponding to the end user, as follows.

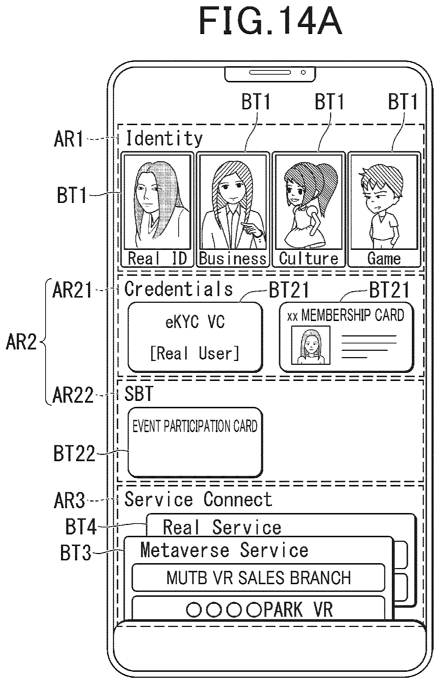

Fig. 14A exemplifies an identity management screen displayed on the display portion of the end-user terminal 300. The identity management screen shown in this figure shows an identity selection area AR1, a qualification information selection area AR2, and a service selection area AR3.

The identity selection area AR1 is an area where operations to select identities for authentication, metaverse entry, etc. are performed. In the identity selection area AR1, buttons BT1 respectively corresponding to real users and multiple avatars are arranged as identities for an end user. In this figure, the button BT1 labeled as "Real ID" corresponds to the real user, and the buttons BT1 labeled as "Business," "Culture," and "Game" correspond to the avatars, respectively.

The qualification information selection area AR2 is an area where operations are performed to select qualification information used by a real user for qualification confirmation in the physical space, or qualification information used by avatars for qualification confirmation in the metaverse.

The qualification information selection area AR2 includes an identification information (VC) area AR21 and an authenticity proof information area AR22.

The identification information area AR21 is an area where operations are performed to select qualification information serving as identification information. In the identification information area AR21, buttons BT21 corresponding to each piece of the identification information item are arranged as options.

The authenticity proof information area AR22 is an area where operations are performed to select qualification information serving as authenticity proof information. In the authenticity proof information area AR22, a button BT22 assigned to each piece of the identification information is arranged as one option for selection.

The service selection area AR3 is an area where operations to select a service used by the identity are performed, the selection being made from among real services provided in the physical space and network services provided in the metaverse. The real services may include services that enable the use of specified cashless payments such as credit cards. The service selection area AR3 has buttons BT3 corresponding to respective services.

In the present embodiment, when end users, as real users in the physical space, use age-restricted services such as purchasing alcoholic beverages at a store, age verification is required. In other words, to be eligible to use the service, you must be of a certain age or older. In such cases, end users can use the avatar management system 2 of the present embodiment to perform age verification as follows.

In this case, the end user selects a real user as the user who will use the service by performing an operation (operation on button BT1) on the identity selection area AR1 of the identity management screen shown in Fig. 14A, for example.

In addition, the end user selects (i.e., operation on the button BT3) a service to be used this time as a real user in the service selection area AR3 of the identity management screen.

Furthermore, the end user selects qualification information that can prove the age required for the service to be used this time in the qualification information selection area AR2 (i.e., operation on the button BT2).

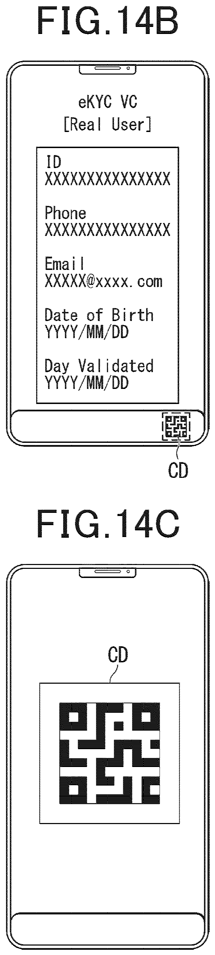

In response to the foregoing operation, the display on the display screen of the end-user terminal 300 transitions from the displayed state shown in Fig. 14A to a qualification information screen showing the contents of the qualification information selected by the operation on the qualification information selection area AR2, as shown in Figure 14B, for example. In this display transition, on the display screen of the end-user terminal 300, a code symbol CD generated based on the selected qualification information is displayed below the qualification information area. The code symbol CD is a code symbolizing information (i.e., age verification information) that certifies that the real user is of the age required or older for a service in question.

The end user performs an operation on the code symbol CD displayed below the qualification information screen. In response to the operation on the code symbol CD, the display screen of the end-user terminal 300 transitions to a display state showing the enlarged code symbol CD as shown in Fig. 14C.

The end user presents the enlarged code symbol CD to, for example, a store clerk. The store clerk then makes a code reader read the presented code symbol CD. The store terminal acquires the age verification information indicated by the read code symbol CD, and notifies that the end user meets the age requirements by displaying a message or others. Hence, the store clerk can confirm that the end user meets the age requirements based on the notifications, so that the store clerk is allowed to provide the required service accordingly

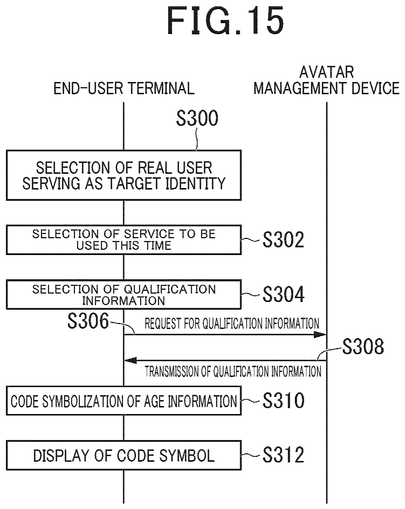

Referring to the flowchart shown in Fig. 15, an example of the processing steps executed by the end-user terminal 300 and the avatar management device 400 in response to the age authentication of the real user shown in Figs. 14A, 14B, and 14C, as above, will now be described.

Step S300: In this step, the end user performs an operation to select a real user in the identity selection area AR1 of the identity management screen (Fig. 14A). The end-user terminal 300 selects the real user as an identity to be used for the service in response to such an operation.

Step S302: The end user selects a service to be used currently in the service selection area AR3 of the identity management screen. Hence, the end-user terminal 300 identifies the service to be used in response to the operation.

Step S304: The end user selects qualification information that proves that the end user meets the age requirements for the service to be used this time in the qualification information selection area AR2 of the identity management screen. The end-user terminal 300 identifies the selected qualification information in accordance with the operation.

Step S306: The end-user terminal 300 sends a qualification information request, which requests the qualification information identified in step S304, to the avatar management device 400. The qualification information may include, for example, a wallet ID associated with the end user and a qualification information ID indicating the qualification information identified in step S304.

Step S308: In this step, the qualification information specified by the qualification information request sent in step S306 was user identification information. In this processing, in the avatar management device 400, the VC management unit 424 acquires, from the user VC memory unit 434, the user identification information specified by the received qualification information request, and processes the acquired user identification information to be sent to the end-user terminal 300.

Step S310: The end-user terminal 300 receives the user identification information sent in step S308 and refers to the age of the end user (real user) indicated in the received user identification information. The end-user terminal 300 generates, based on the referenced age, age verification information indicating that the age requirements for the service to be used this time (i.e., the service selected in step S302) are met, and generates a code symbol indicating the generated age verification information. The age verification information may be contents that indicate that the user meets the age requirements, or contents that specify the user's actual age.

Step S312: The end-user terminal 300 presents the code symbol generated in step S310 on the display section.

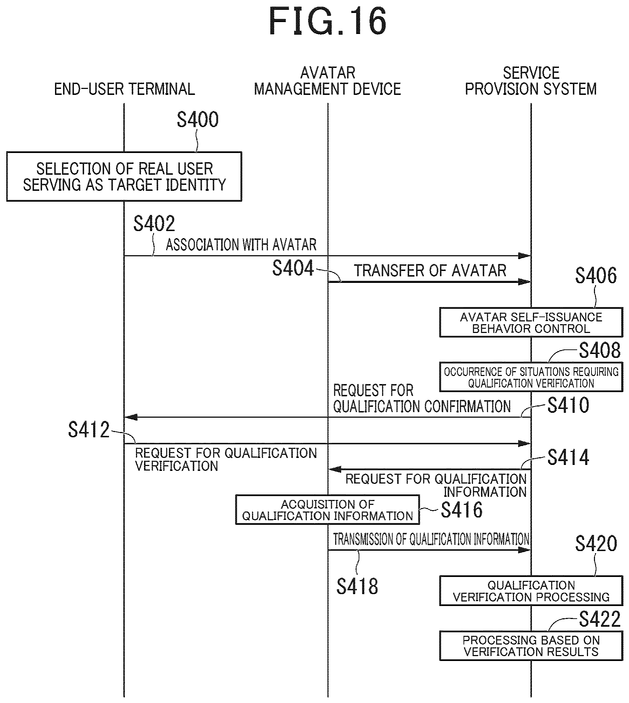

Now referring to the sequence diagram in Fig. 16, an example of the processing steps executed by the avatar management system 2 in the preset embodiment in relation to the qualification confirmation of avatars acting in the metaverse. Step S400: In this step, the end user selects one avatar to act in the metaverse in the identity selection area AR1 of the identity management screen (Fig. 14A). The end-user terminal 300 selects an avatar selected by the operation, as an identity of the subject to be acted in the metaverse.

Step S402: The end user causes the end-user terminal 300 to access the service provision system 510 that provides a metaverse corresponding to the purpose of use of a target avatar. The end user performs avatar linking operations to create an avatar on the service provision system 510 being accessed. The end-user terminal 300, as avatar linking control corresponding to avatar linking operations, notifies the avatar ID of the avatar to be present in the metaverse to the service provision system 510 to be accessed.

Step S404: The service provision system 510 requests avatar information of the avatar indicated by the notified Avatar ID from the avatar management device 400. The avatar provision control unit 423 of the avatar management device 400 transfers the avatar based on the requested avatar information to the service provision system 510 that made the request. The service provision system 510 enables the transferred avatar to exist in the metaverse. In this process, the end-user terminal 300 which now accesses the service provision system 510 displays the appearance of the target avatar in the metaverse.

Step S406: In the present embodiment, the avatar that came to exist in the metaverse in step S404 is made to act in the metaverse under the control of the avatar provision control unit 423. In other words, in this case, the avatar acts spontaneously, independently of the end user's operations on the end-user terminal 300.

Alternatively, the control of the avatar provision control unit 423 to make the avatar act spontaneously may be performed based on a predetermined plan (scenario). Still alternatively, the control of making the avatar act spontaneously may be performed by an avatar provision control unit 423 which adopts AI (Artificial Intelligence) processing. In this control, the avatar provision control unit 423 may also control the avatar using a learned model that has been trained to determine how the avatar should behave based on attributes such as the occupation and personality set for the avatar, the environment of the metaverse in which the avatar exists, and the content of communication with other avatars.

There can still be provided an alternative in step S406, in which the end user may perform an operation to cause a target avatar existing in the service provision system 510 to perform an action.

Step S408: in this process, a situation requiring confirmation of the avatar's qualifications (i.e., a qualification-confirmation required situation) has occurred while the avatar is acting in the metaverse. As a specific example, when the avatar attempts to participate in an event, it is necessary to confirm whether the avatar has a ticket that allows participation in the event, as a qualification for participation.

Step S410: In response to occurrence of a qualification-confirmation required situation, the service provision system 510, which serves as a qualification confirmer, sends a qualification confirmation request to the end-user terminal 300 corresponding to the target avatar. The qualification confirmation request may include the avatar ID of the target avatar which serves as information identifying the target avatar.

Step S412: The end-user terminal 300 notifies the end user, for example by displaying a message, that qualification confirmation of the target avatar is required in response to receiving the qualification confirmation request. The end user acknowledges that qualification confirmation for the target avatar is required in response to the reception of the notification. Thus, in the qualification information selection area AR2 of the identity management screen (Fig. 14A) displayed on the end-user terminal 300, the end user performs the operation of selecting the qualification information to be used for the qualification confirmation required this time.

The end-user terminal 300 sends a qualification confirmation request to the service provision system 510, in which the qualification confirmation request includes the qualification information ID of the qualification information selected by the operator's operation.

Step S414: In response to receiving the qualification confirmation request, the service provision system 510 sends a qualification information request to the avatar management device 400. The qualification information request includes the qualification information ID included in the qualification confirmation request which has been received.

Step S416: The avatar management device 400 acquires the qualification information indicated by the qualification information ID included in the qualification information request sent in step S414. When the qualification information specified by the qualification information ID included in the qualification information request is authenticity proof information (i.e., an authenticity certificate), the authenticity verification information management unit 422 may obtain specified qualification information from the network (e.g., blockchain). Alternatively, if the qualification information specified by the qualification information ID included in the qualification information request is avatar identification information an (avatar VC), the VC management unit 424 may obtain a corresponding avatar VC from the avatar VC memory unit 433.

Moreover, when the VC management unit 424 acquires an avatar VC serving as qualification information, the VC management unit 424 may sign (encrypt) it using the private key corresponding to the avatar DID associated with the avatar identification information in avatar VC memory unit 433.

Step S418: The authenticity verification information management unit 422 or VC management unit 424 sends the qualification information (i.e., authenticity proof information or Avatar identification information) acquired in step S420 to the service provision system 510. In cases where the avatar identification information is sent, the corresponding issuer DID and avatar DID may be added to the avatar identification information to be sent.

Step S420: The service provision system 510 executes a qualification confirmation process using the qualification information sent in step S418.

If the received qualification information is a token (i.e., authenticity proof information), the service provision system 510 may, for example, confirm the contents of the authenticity proof information and determine whether the target avatar corresponds to a person with valid qualifications.

In addition, if the received qualification information is avatar identification information, the service provision system 510 may send, to the DPKI system 700, a public key request for the public key corresponding to the received avatar identification information. The public key request includes the issuer DID and avatar DID both appended to the received avatar identification information.

The DPKI System 700 acquires both a public key corresponding to the issuer DID and a public key corresponding to the avatar DID from the blockchain, in which the issuer DID and the avatar DID have been included in the received public key request.

The DPKI system 700 sends the two public keys (i.e., the public key corresponding to the issuer DID and the public key corresponding to the avatar DID), which have been acquired via receiving the avatar identification information in step S418, to the service provision system 510 that sent the public key request.

The service provision system 510 decrypts the received avatar identification information using the two public keys that have been received. If the decryption is successful, the received avatar identification information is valid, thus showing that the identity of the target avatar can be verified. In contrast, if the decryption is unsuccessful, the received avatar identification information is invalid, thus showing that the identity of the target avatar cannot be verified.

Step S420: The service provision system 510 executes processing according to the confirmation result checked in step S420.

Furthermore, as shown in Fig. 13, when the qualification information corresponding to one end user is stored in the qualification information wallet WL for management, it is also easy to arbitrarily associate qualification information with the identities (real user, avatar) corresponding to the end user. As a result, the qualification information assigned to each identity corresponding to each end user can be shared and used between the identities.

In the present embodiment, there is provided an example in which identities (real user, avatar) are created for one end user. However, in the present embodiment, it is also possible that the avatar can be associated with a plurality of specific or unspecified end users.

In such a case, the avatar provision control unit 423 may be configured to enable voluntary actions for all or some of the multiple end users. In addition, the avatar provision control unit 423 in such a case may be configured to enable the avatar to act in response to avatar operations performed based on the consensus of a plurality of end users or avatar operations performed by some of the end users.

In such a modified case, it is also acceptable for the qualification information wallet WL, which stores therein qualification information for multiple real users corresponding to multiple end users and qualification information for predetermined multiple avatars, to be managed for multiple end users.

Furthermore, in the present embodiment, the end user is not necessarily limited to an individual. In the present embodiment, the end user may be an organization or group, such as a company or association.

The Avatar management system 2 according to the present embodiment is not limited to the configuration shown in the embodiment. As a modification, the functional parts specified in the avatar management device 400 shown in Fig. 4 may be provided in the end-user terminal 300. For example, functions of the units including the wallet management unit 425 and wallet management information memory unit 435, which are related to the qualification information wallet WL, can be provided in the end-user terminal 300. This modified configuration enables the end-user terminal 300 to manage the qualification information for corresponding end users in a unified manner.

Additionally, the programs for realizing the functions of the configurations including the aforementioned avatar generation system 100, end-user terminal 300, avatar management device 400, service provision system 510, VC issuance system 600, and DPKI system 700 can be recorded on a computer-readable recording medium, and the program recorded on this recording medium can be loaded into a computer system for execution. This type of computer system also enables the configurations including the aforementioned avatar generation system 100, end-user terminal 300, avatar management device 400, service provision system 510, VC issuance system 600, and DPKI system 700 to execute the processes given to the respective configurations. In the present embodiment, the definition of wording "loading a program recorded on a recording medium into a computer system for execution" includes installing the program on the computer system. The term "computer system" as used herein refers to hardware such as operating systems and peripheral devices. Moreover, the term "computer system" may include multiple computer devices connected via networks including communication lines such as the Internet, WAN, LAN, and/or dedicated lines. In addition, the wording "computer-readable recording medium" may refer to portable media such as floppy disks, optical magnetic disks, ROM, CD-ROM, etc., as well as storage devices such as HDD and SSD that are built into computer systems. The foregoing recording medium that stores therein programs may be a non-transitory recording medium, such as a CD-ROM. In addition, the recording medium may include internal or external recording medium accessible from a distribution server for the purpose of distributing the programs. Program codes stored in the recording media of the distribution server may be different from program codes written in a form executable by the terminal device. Specifically, as long as the programs can be downloaded from the distribution server and installed in a form that can be executed on the terminal devices, the formats in which the program codes are stored in the distribution server are not limited to specific ones. Alternatively, it is possible to divide the program into multiple parts, download such divided program parts at different times, and then combine the divided program parts on the terminal device, or to use different distribution servers to distribute each of the divided parts of the program. Moreover, the term "computer-readable recording medium" shall include media that retain programs for a certain period of time, such as volatile memory (RAM) installed within a computer system that functions as a server or client in a configuration in which programs are transmitted via a network. In addition, the foregoing program may be for the purpose of realizing some of the functions described above. Furthermore, the foregoing functions can be realized by using files (programs) combined with programs already recorded in the computer system, in which such files (programs) are referred to as difference files (difference programs).

### <Additional Notes>

(1) A one mode according to the present embodiment relates to a qualification management system (identity management system), including:
   a qualification management unit that stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among:
   one or more pieces of qualification information being assigned to an identity serving as the real user and the user has a predetermined qualification; and
   one or more pieces of qualification information being assigned to an identity serving as an avatar which is allowed to exist in a metaverse and corresponds to the real user.
(2) The one mode according to the present embodiment is the qualification management system according to the additional note (1), wherein the qualification information may include identification information that proves a status of the identity
(3) The one mode according to the present embodiment is the qualification management system according to the additional note (1) or (2), wherein
   the qualification information may include authenticity proof information that proves authenticity of the identity.
(4) The one mode according to the present embodiment is the qualification management system according to any one of the additional notes (1) to (3), wherein
   the qualification management unit outputs qualification information serving as information for confirming an identity to be confirmed, the qualification information being selected from the qualification information stored in the memory unit, based on an operation performed by the real user on a corresponding user terminal.
(5) Another mode according to the present embodiment relates to a qualification management method (identity management method) performed in a qualification management system (identity management system), the method comprising:
   a qualification management step, wherein a qualification management unit stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being: one or more pieces of qualification information being assigned to an identity serving as the real user and the user has a predetermined qualification; and
   one or more pieces of qualification information being assigned to an identity serving as an avatar which is allowed to exist in a metaverse and corresponds to the real user.
(6) Another mode according to the present embodiment relates to a program performed by a computer installed in a qualification management system (an identity management system), wherein the computer functions as a qualification management unit that stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user and the user has a predetermined qualification; and one or more pieces of qualification information being assigned to an identity serving as an avatar which is allowed to exist in a metaverse and corresponds to the real user.
(7) Another mode according to the present embodiment relates to a non-volatile recording medium recording a program executed by a computer, wherein the computer functions as a qualification management unit that stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user and the user has a predetermined qualification; and one or more pieces of qualification information being assigned to an identity serving as an avatar which is allowed to exist in a metaverse and corresponds to the real user.

### <Second Embodiment>

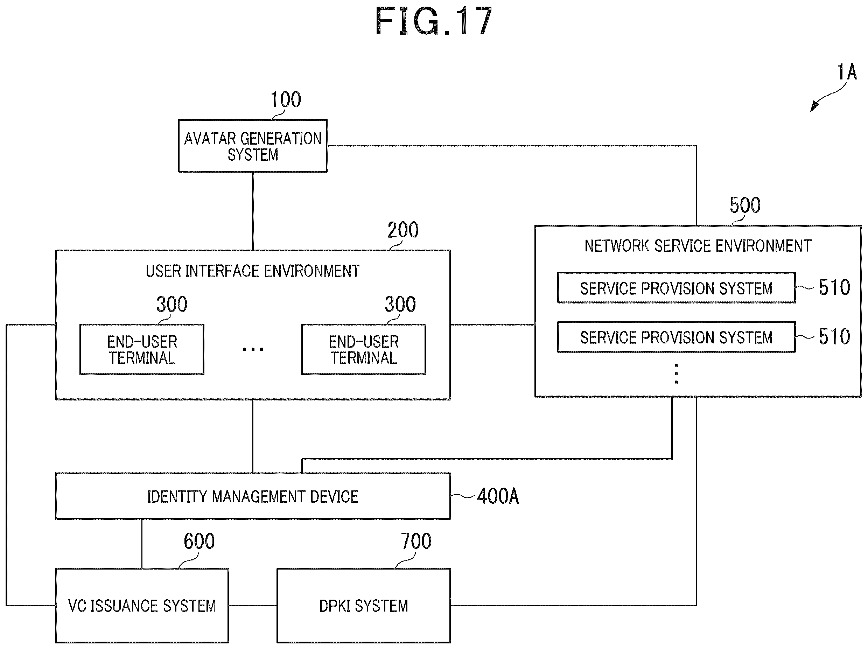

Fig. 17 shows an overall configuration example of the identity management system (an example of an identity management system) 1A according to the present embodiment. In the present embodiment, the identity includes avatars that exist and act in the metaverse. Such avatars are designed to act in response to end-user operations and instructions, although such avatars may also include AI (Artificial Intelligence) avatars (AI avatars) that can act autonomously without being controlled by end-user operations. The metaverse is a digital space (serving as an example of an activity space) built on a network. In addition, in the present embodiment, identities may be associated with avatars and may also include end users who act in the physical space (serving as an example of an activity space).

In the following explanation, in some cases, the end user who acts as an identity may be referred to as a "real user." The term "real user" is a term used to refer to end users as user-related entities that exist in the physical space, and is contrasted with avatars that correspond to end users and exist as user-related entities in digital spaces.

In addition, in the present embodiment, the identities may also include organizations such as companies and groups. The identity of such an organization may include both the real organization that exists in the physical space and the organization that exists in the metaverse corresponding to such a real organization. Additionally, in the present embodiment, the identity may include real users, real organizations, avatars, etc., as IP holders who own intellectual property (IP) such as two-dimensional or three-dimensional images, text, and music.

The identity management system 1A according to the present embodiment is provided with an avatar generation system 100, a user interface environment 200, an identity management device 400A, a network service environment 500, a VC (Verifiable Credentials: corresponding to identification information) issuance system 600, and a DPKI system 700, as its components. The connections between or among the components of these systems are made via a network.

The avatar generation system 100 is a system that generates avatars used in a network service environment 500.

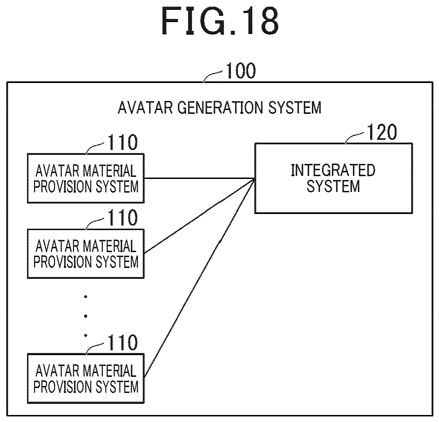

Fig. 18 exemplifies the configuration of the avatar generation system 100. The avatar generation system 100 shown in this figure is provided with multiple avatar material provision systems 110 and a single integrated system 120.

Each of the avatar material provision systems 110 is a system that generates specified avatar materials from among the avatar materials that constitute avatars and provide the generated avatar materials. The avatar material provision systems 110 may, for example, be operated by respective avatar material providers (such as companies).

Meanwhile, the integrated system 120 generates avatars by acquiring necessary avatar materials from among the avatar materials provided by the avatar material provision systems 110 and integrating (combining) the acquired avatar materials.

In the avatar generation system 100, the avatar material provision systems 110 and the integrated system 120 may be connected via networks.

Also, the number of avatar material provision systems 110 provided in the avatar generation system 100 can be one or more, not limited to a specific number. In addition, the number of integrated systems 120 may also be one or more and is not limited to a specific number.

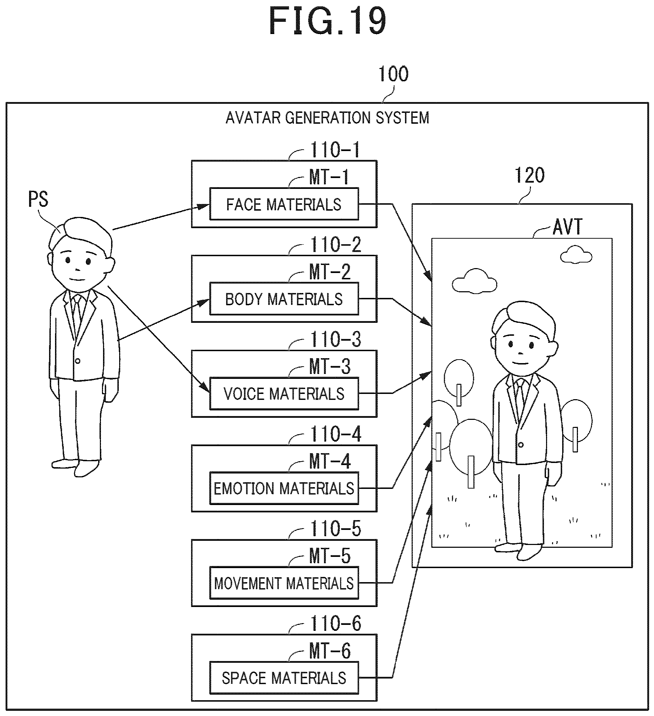

Fig. 19 schematically shows the flow of avatar generation performed in the avatar generation system 100. In the present embodiment, the avatar may be, for example, a two-dimensional or three-dimensional (3D) character, or a three-dimensional real avatar such as a person. The explanation of this figure uses the example of generating a three-dimensional real avatar acting as a person. The real avatar is an avatar that realistically reproduces the appearance of an actual person PS based on information obtained by photographing the original person PS.

In the avatar generation system 100 shown in the figure, there is provided an example in which six avatar material provision systems 110-1 to 110-6 are employed.

The avatar material provision system 110-1 generates 3D face (head) materials as avatar materials and provides the generated face materials MT-1.

The avatar material provision system 110-2 generates body materials MT-2 as avatar materials and provides the generated body materials MT-2. In this explanation, the body materials MT-2 refer to the parts of the human body excluding the head. In addition, the avatar material provision system 110-2 generates body materials MT-2 in a state where the clothing is worn.

The avatar material provision system 110-3 generates voice materials MT-3 as avatar materials and provides the generated voice materials MT-3. The voice materials MT-3 are the raw materials for the voice sounds to be spoken by the avatar.

The avatar material provision system 110-4 generates emotion materials MT-4 as avatar materials and provides the generated emotion materials MT-4. The emotion materials MT-4 include information that changes, for example, the expressions of dace materials and the movements of body materials MT-2 according to predetermined emotions. Use of the emotion materials MT-4 enables the avatar to express emotions.

The avatar material provision system 110-5 generates movement materials MT-5 as avatar materials and provides the generated movement materials MT-5. The movement materials MT-5 include information, i.e., materials, for giving movements to the avatars. For example, if an avatar appears, as a weather forecaster, in weather forecast web contents, the movement materials MT-5 generated for the weather forecaster can give the avatar movements corresponding to the weather forecaster, such as pointing to a weather map.

The avatar material provision system 110-6 generates space materials MT-6 as avatar materials and provides the generated space materials MT-6. The avatar material provision system 110-6 generates space materials MT-6 as avatar materials and provides the generated space materials MT-6.

In the avatar generation system 100 shown in the foregoing figure, the avatar material provision system 110-1 captures a source person PS and generates face materials MT-1 for the person PS. Additionally, the avatar material provision system 110-2 captures the source person PS and generates body materials MT-2 for the person PS. Furthermore, the avatar material provision system 110-3 uses data recorded from voice of the source person PS to generate voice materials MT-3.

The integrated system 120 then acquires the avatar materials (i.e., face materials MT-1, body materials MT-2, voice materials MT-3, emotion materials MT-4, movement materials MT-5, and space materials MT-6) generated by the respective avatar material provision system 110-1 to 110-6. The integrated system 120 generates an avatar AVT by integrating the acquired avatar materials.

In the avatar generation, the avatar AVT may use some or all of the avatar materials (face Materials, body materials, voice materials, emotion materials, movement materials, and space materials) shown in the figure, but not necessarily all of the acquired materials. In other words, the avatar AVT may be generated using some of the avatar materials shown in the example of the foregoing figure. Which avatar materials to use when generating an avatar may be changed depending on factors such as the network service where the generated avatar will be used or the environment of the metaverse where the avatar will exist.

The explanation will be returned to Fig. 17. The user interface environment 200 provides an environment that provides a user interface to end users who use network service environment 500. Specifically, the user interface environment 200 includes one or more end-user terminals 300 corresponding, user by user, to one or more end users.

The end-user terminal 300 is a terminal used by end users to receive network services provided by the network service environment 500.

The end-user terminal 300 connects to the service provision system 510 in response to end user's operations and can display applications and/or contents corresponding to the network services provided by the connected service provision system 510, and output such applications and/or contents via audio or other means.

The end-user terminal 300 may be a personal computer, smartphone, tablet device, or the like.

The identity management device 400A manages identities (real users, avatars).

The identity management device 400A stores avatars generated by the avatar generation system 100 as identities to be managed. The identity management device 400A uploads the avatars, which are stored as management targets, to the network service environment 500. The network service environment 500 provides, to end users, network services which use the avatars provided by the network service environment 500.

Moreover, the identity management device 400A enables authentication of the avatars by providing authenticity proof information to the avatars which are now under management.

Specifically, the identity management device 400A responds to an authenticity inquiry (i.e., authenticity confirmation request) regarding the avatar used in the network service provided to the end-user terminal 300, determines the authenticity of the avatar which is now subject to the inquiry, and sends the determination result to the end-user terminal 300.

In addition, the identity management device 400A causes the VC issuance system 600 to issue information (i.e., avatar identification information) to be used as an identification certificate for identifying the managed avatar itself. As a result, the identity management device 400A can manage the avatar by storing therein the issued avatar identification information.

To be specific, the identity management device 400A sends the avatar identification information of the avatar to be identified in response to an avatar identification request issued from a certain network service in the network service environment 500, to a network service that issued the identification request. In this process, the identity management device 400A can sign (digitally sign), for encryption, the identification information to be sent, by using a private key associated with the target avatar.

In addition, the identity management device 400A may manage wallets (an example of information storage media). The wallets according to the present embodiment may include not only assets stored in a cryptocurrency environment, but also, for example, qualification information (i.e., authenticity proof information, identification information (VC)) of real users or avatars related to one end user. The identity management device 400A may be configured to manage wallet data using a blockchain. The wallets may be configured as an application provided by the identity management device 400A.

The network service environment 500 is an environment that provides one or more network services. To be specific, the network service environment 500 includes one or more service provision systems 510 that provide predetermined network services. The service provision system 510 may be configured as a web server or application server built according to the contents of the network services to be provided.

The network services provided by the service provision system 510 may include electronic commerce (EC) services used by real users, websites utilizing avatars, network games, or conferencing systems. In addition, the network services that utilize avatars, which are as described, may include services that allow avatars to exist in a three-dimensional digital space called a metaverse and act within the metaverse. Specifically, examples of such network services include a marketplace service in the metaverse where avatars can purchase products at stores, a service that enables direct buying and selling between avatars in the metaverse, and a service that allows celebrities or specific characters to exist in the metaverse. Additionally, further examples of such network services include providing weather forecasts with avatars as weather forecasters, medical consultations with avatars portrayed as doctors, and fortune-telling services with avatars as fortune-tellers.

Furthermore, the service provision system 510 may be capable of providing multiple network services. The service provision system 510 which provides a metaverse as a network service may provide multiple metaverses.

The VC issuance system 600 is a system that issues identification information in response to an issuance request. The VC issuance system 600 may be configured with one or more devices connected to a network, for example.

The VC issuance system 600 according to the present embodiment is configured to issue identification information that proves the identity of the end user (real user), and is also configured to issue identification information that proves the identity of the avatar itself managed by the identity management device 400A.

The VC issuance system 600 may be configured to issue multiple pieces of identification information each corresponding to multiple issuers.

The VC issuance system 600 can issue identification information regarding a public issuer (i.e., public identification information). The public issuer is an issuer such as an agency operated by the government, an agency authorized by the government, or an agency with a certain level of social credibility. Specifically, the public issuers include, for example, institutions that issue licenses based on specified qualifications, approved companies, educational institutions, local governments, and financial institutions. For example, the public identification information used for payments in the metaverse may be issued by financial institutions as the issuing authorities. In addition, the public identification information required for admission to specific facilities in the metaverse may be issued by the companies, educational institutions, local government agencies, etc. that operate those facilities.

In addition, the VC issuance system 600 issues identification information for private issuers (i.e., private issuer identification information). The private issuer may be, for example, a volunteer circle, a civic sports organization, or a school club activity. Private identification information issued by such private issuers can prove, for example, that an avatar belongs to a corresponding private organization, that a certificate or license issued by the corresponding private organization has been granted to the avatar, and so on.

Moreover, the private issuers may include, for example, fans (supporters) of artists. The private identification information issued by fans of artists is attached to an artist's avatar, thus being possible to prove that the artist's avatar is supported by fans.

In addition, end users may be included in the private issuers. As an example, end users acting as private issuers may issue private identification information for friend verification. Avatars with private identification information for friend verification can prove that such avatars are friends with, for example, the avatar of an end user who is a private issuer.

In addition, the private issuer may be, for example, the operators of the service provision systems 510. By way of example, the service provision system 510 acting as a private issuer may issue private identification information for quality verification. The avatar of an end user to whom the private identification information for quality verification has been assigned can prove that such an avatar has not committed any fraudulent acts, etc., in the metaverse provided by the service provision system 510, for example.

In addition, the private issuers may include event organizers, or others. As an example, a private issuer may issue private identification information serving as tickets for events held in the metaverse of a specified service provision system 510. Avatars with the private identification information assigned as tickets can prove that the avatars are eligible to participate in events held in the metaverse of the specified service provision system 510.

As can be understood from the example of the forgoing private issuers, the private identification information can be used by private issuers to verify the identity of avatars or avatar-enabled users, based on relationships between or among individuals and evaluations made by individuals.

Other examples of issuing the identification information based on interpersonal relationships include private identification information that can be issued based on connections in social network systems (SNS). In this case, the private identification information may, for example, prove that a certain user or avatar is a friend of a friend of the private issuer on the SNS.

In addition, examples of the private identification information based on individual's evaluations include issuing the private identification information that can be issued based on user evaluations (sellers, buyers) in network services where transactions between individuals take place.

In addition, as another example of issuing the private identification information based on evaluations by other individuals, the private identification information may be issued based on credit rating information indicating a user's creditworthiness provided by a service that evaluates the creditworthiness of users by inputting information such as the user's age, gender, occupation, and purchase history.

The identification information issued by the VC issuance system 600 in the present embodiment may correspond to, for example, VC (Verifiable Credential). In the following explanation, an example is provided where the identification information in the present embodiment corresponds to VC. Hence, in the following explanation, the identification information issued by the VC issuance system 600 may be denoted as VC.

Additionally, in the present embodiment, the identification information that verifies the identity of the avatar itself is referred to as "avatar identification information (avatar VC)," and this is distinguished from the identification information that verifies the identity of the real user (end user) which is referred to as "user identification information (user VC)." It is noted that, when there is no particular distinction between the avatar identification information and the user identification information, such information is referred to as identification information or VC.

The DPKI System 700 manages public keys in accordance with DPKI (Decentralized Public Key Infrastructure).

In the present embodiment, the VC issuance system 600 generates a pair of public and private keys corresponding to the issuer DID, which is a DID (Decentralized Identifier) that uniquely identifies the issuing authority, when issuing identification information serving as VC. This system also generates a pair of public and private keys corresponding to the holder DID (end user DID or avatar DID), which is a DID that uniquely identifies the holder (end user or avatar) of the identification information.

The VC issuance system 600 registers the generated public keys (public key corresponding to issuer DID and public key corresponding to holder DID) in the DPKI system 700. The DPKI System 700 stores the registered public keys in a manner that corresponds to each of the issuer DID and holder DID.

The DPKI System 700 may be configured to register public keys by storing the keys on a blockchain. In addition, the DPKI system 700 may be configured as a device that functions as a node corresponding to a blockchain that stores public keys therein.

When it becomes necessary to identify a holder, the service provision system 510 acquires the public key associated with the holder DID of a target holder from the DPKI system 700. The service provision system 510 can execute identity verification by decrypting the identification information by using the acquired public key to determine whether the identification information is valid.

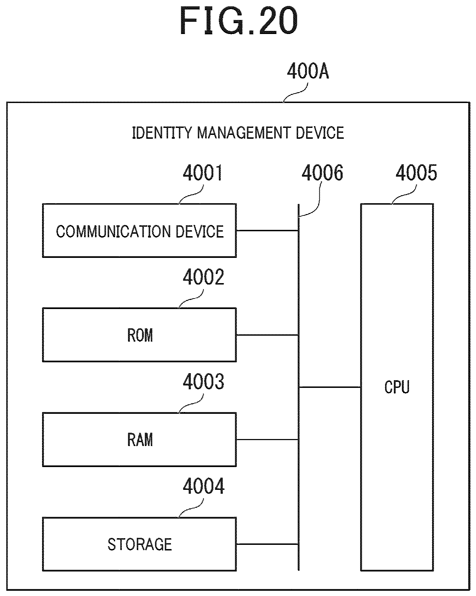

Fig. 20 shows the hardware configuration of the identity management device 400A. The identity management device 400A shown in this figure is provided with a communication device 4001, ROM (Read Only Memory) 4002, RAM (Random Access Memory) 4003, storage 4004, and CPU (Central Processing Unit) 4005. The communication device 4001, ROM 4002, RAM 4003, storage 4004, and CPU 4005 are mutually connected by a bus 4006.

The communication device 4001 is a device that performs communication via the network.

The ROM 4002 stores data therein, which cannot be rewritten.

The RAM 4003 temporarily stores data therein, which are used for calculations executed by the CPU 4005.

The storage 4004 is, for example, an HDD (Hard Disc Drive) or SSD (Solid State Drive), and stores various data therein, which are program data, for example.

The CPU 4005 executes various control and processing operations by executing programs stored in the storage 4004.

Although not shown in the figure, the identity management device 400A may also include a GPU (Graphics Processing Unit).

Additionally, the system may be configured to adopt multiple network terminals distributed in a manner compatible with blockchain technology to execute transactions, thereby achieving functionality equivalent to that of the identity management device 400A.

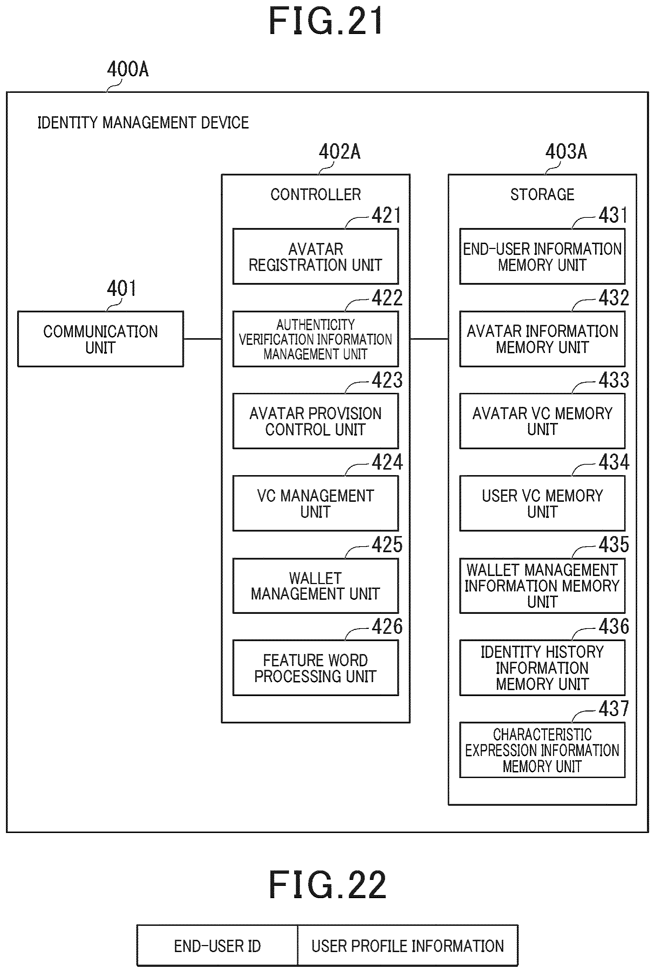

Fig. 21 shows an example of a functional configuration of the identity management device 400A. The functions of the identity management device 400A shown in the figure are realized by the CPU (Central Processing Unit) installed in the identity management device 400A which is set to execute given programs.

The identity management device 400A in the figure is provided with a communication unit 401, a controller 402A, and a storage 403A.

The communication unit 401 is configured to communicate via the network.

The controller 402A executes various types of control processing provided in the identity management device 400A. The controller 402A shown in the figure is provided with an avatar registration unit 421, an authenticity verification information management unit 422 (provided as an example of the qualification management unit), an avatar provision control unit 423, a VC management unit 424 (provided as an example of the qualification management unit), a wallet management unit 425, and a feature word processing unit 426.

Of these units, the avatar registration unit 421 registers avatars generated by the avatar generation system 100 as objects to be managed. In the present embodiment, registering the avatar means storing avatar information (which will be described later) of the avatar to be managed into the avatar information memory unit 432. Avatars registered by the avatar registration unit 421 can be used by the service provision system 510 provided in the network service environment 500 for network services provided by the service provision system.

The authenticity verification information management unit 422 is configured to manage the authenticity proof information of the avatar. Practically, the authenticity verification information management unit 422 assigns authenticity proof information to the registered avatar. Details on the authenticity proof information will be provided later.

In addition, the authenticity verification information management unit 422 may perform authenticity verification on the avatar subject to authenticity verification, by using the authenticity proof information assigned to the registered avatar in response to the authenticity confirmation request from the end-user terminal 300. The authenticity verification information management unit 422 may send authenticity determination results to the end-user terminal 300 from which the authenticity confirmation request was issued.

Meanwhile, the avatar provision control unit 423 is configured to execute control related to providing (i.e., sending avatar information) the registered avatars to the service provision system 510. The identity management device 400A and each of the service provision systems 510 are connected via an API. For this reason, the avatar provision control unit 423 sends avatar data to a service provision system 510 in an online connected state.

The VC management unit 424 is configured to manage VC (i.e., identification information) assigned to identities that exist in the physical space or the metaverse. The VC managed by the VC management unit 424 is user identification information (i.e., user VC) corresponding to the respective identities of real users and avatar identification information (i.e., avatar VC) corresponding to the respective identities of avatars.

The VC management unit 424 requests the VC issuance system 600 to issue identification information for identities (i.e., real users or avatars) via the network. The VC issuance system 600 issues identification information for a target identity upon request. The VC issuance system 600 sends, to the identity management device 400A, the issued identification information and the corresponding private keys (private key corresponding to the issuer DID and private key corresponding to the holder DID). The VC management unit 424 stores the sent identification information (i.e., avatar identification information or user identification information) and the private key, in a mutually corresponding format, into the avatar VC memory unit 433 or the user VC memory unit 434.

The wallet management unit 425 is configured to manage wallets used by the real users and avatars.

The feature word processing unit 426 is configured to extract multiple words serving as feature words according to the characteristics of each identity and then generate information (an example of feature-word relationship information) indicating the relationship between the extracted words (an example of feature words). The information thus generated in this way can be regarded as expressing the characteristics of a corresponding identity by showing the relationship. with the extracted words, and thus will be referred to as "characteristic expression information."

In addition, the feature word processing unit 426 can visualize the generated characteristic expression information and display the visualized information on the end-user terminal 300.

The storage 403A stores therein various types of information to which the identity management device 400A corresponds. The storage 403A is provided with an end-user information memory unit 431, an avatar information memory unit 432, an avatar VC memory unit 433, a user VC memory unit 434, a wallet management information memory unit 435, an identity history information memory unit 436, and a characteristic expression information memory unit 437.

Of these units, the end-user information memory unit 431 stores therein end-user information. The end-user information is information about an end user who has registered, in the identity management device 400A, one or more avatars associated with the user.

Fig. 22 shows an example of end-user information corresponding to one end user. The end-user information illustrated in the figure includes fields for an end-user ID and user profile information. The end-user ID field stores an end-user ID that uniquely identifies the corresponding end-user.

In the user profile information field, assocaited end user's profile information is stored. The user profile information may include, for example, an end user's name, gender, address, etc.

Avatar information is stored in the avatar information memory unit 432.

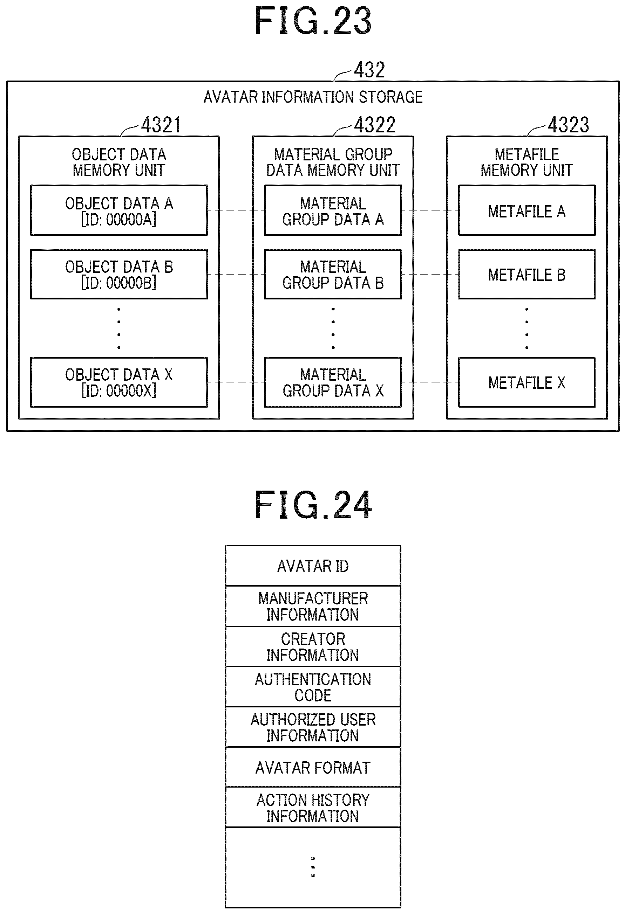

Fig. 23 exemplifies the avatar information to be stored in the avatar information memory unit 432. The avatar information memory unit 432 shown in this figure is provided with an object data memory unit 4321, a material-group data memory unit 4322, and a metafile memory unit 4323.

The avatar information corresponding to one avatar includes, for example, object data, material-group data, and metafiles.

Object data for each registered avatar is stored in the object data memory unit 4321.

Material-group data for each registered avatar is stored in material-group data memory unit 4322. Metafiles for each registered avatar are stored in the metafile memory unit 4323. Among the object data memory unit 4321, the material-group data memory unit 4322, and the metafile memory unit 4323, object data, material-group data, and metafiles for the same avatar are associated by the same avatar ID.

In this specific case, the object data A, material-group data A, and metafile A stored in the object data memory unit 4321, material-group data memory unit 4322, and metafile memory unit 4323, respectively, which are made to correspond to an avatar A, are associated with each other by an avatar ID [00000A] that is able to uniquely identify the avatar A.

The object data is provided as entity data of an object serving as the corresponding avatar. The object data is formed by mutually combining components such as head and body, generated using predetermined avatar materials, for example.

The material-group data is provided as data that includes one or more avatar materials that add specified properties to the entity of an avatar defined by the object data. The material-group data may include, for example, voice materials, emotion materials, movement materials, and/or space materials. The material-group data enables an avatar object to produce sound, change facial expressions, perform movements, and/or exist within a digital space according to a desired design.

The metafile includes one or more metadata to be added to a corresponding avatar.

Fig. 24 shows an example of the metafile corresponding to one avatar. The metafile shown in this figure includes metadata such as avatar ID, originator information, creator information, authentication code, authorized user information, avatar format, and/or and action history information.

The Avatar ID is an identifier that uniquely identifies an avatar within the avatar information stored by the avatar information memory unit 432. The Avatar ID may be issued by the avatar registration unit 421 upon registration of a corresponding avatar. As described, the avatar ID enables the object data, material-group data, and metafile, which correspond to the same avatar, to correspond to each other.

The originator information is information about the original person (originator) corresponding to the avatar. The originator information may include, as information items, an originator ID and originator's profile information. The originator information may be provided from the avatar generation System 100. If the originator (i.e., person) is an end-user, the originator ID may use the end-user ID assigned to a corresponding end user.

The creator information refers to information about the creator of an associated avatar. The creator may be, for example, the integrated system 120 that generated the associated avatar within the avatar generation system 100, which may be an organization such as a company or an individual.

The authentication code is a code issued by the identity management device 400A, corresponding to the avatar being provided, when the service provision system 510 receives an avatar provision (i.e., transmission of avatar information) from the identity management device 400A.

The authorized user information is information concerning authorized users. The authorized user is a person who possesses usage rights for the associated avatar. The authorized user may also be an end user who is the originator of an avatar. In this process, the authorized user can have an avatar originated by the user exist within the metaverse provided by the service provision system 510 and, for example, act within the metaverse in response to operations on the end-user terminal 300. Additionally, the authorized user may be an operator or similar entity of a specific service provision system 510. Authorized user information is information that identifies such an authorized user. Specifically, the authorized user information may be a user account, including an authorized user ID, username, and/or password, which are registered by the authorized user. When the authorized user is an end-user, the authorized user ID may be an end-user ID.

Furthermore, the authorized user information may include an original authorized user (i.e., primary authorized user), such as an end user who created an avatar, for instance, but also other authorized users (i.e., secondary authorized users) who have been granted usage rights, for instance.

The avatar format specifies a file format, specifications, and/or others of an avatar, as being a format associated with the avatar.

The action history information indicates the history of actions of an associated avatar in the metaverse provided by each of the service provision systems 510. The action history information for each avatar may, for example, be acquired by the avatar provision control unit 423 from each of the service provision systems 510.

The explanation will now be returned to Fig. 21. The avatar VC memory unit 433 is in charge of storing therein avatar identification information (avatar VC) for each registered avatar. Furthermore, the avatar VC memory unit 433 stores therein the private key associated with the avatar identification information (i.e., a private key corresponding to the issuer DID and a private key corresponding to the avatar DID).

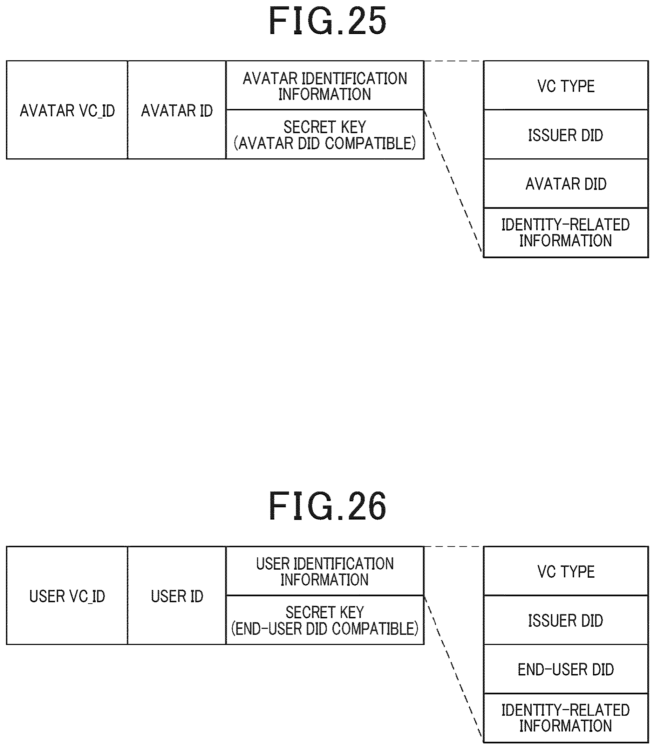

Fig. 25 shows an example of the information (avatar identification information and private key) stored by the avatar VC memory unit 433, corresponding to one avatar.

As shown in the figure, for the avatar VC_ID and the avatar ID, the avatar VC memory unit 433 stores therein the avatar identification information and the private key corresponding the avatar DID such that the avatar identification information and the private key are made to correspond to each other. The avatar VC_ID is a unique identifier assigned to the corresponding avatar identification information.

In this way, the avatar identification information and private key are associated with the avatar ID. This enables the avatar identification information and private key to be managed in association with the corresponding avatar information.

The avatar identification information includes fields for VC type, issuer DID, avatar DID, and avatar-related information.

The field for the VC type is formed to store information indicating the type (type or format) of the identification information.

The field for the issuer DID is formed to store the issuer DID indicating the issuer of the avatar identification information.

The field for the avatar DID is formed to store the avatar DID of the corresponding avatar.

Moreover, the field for the avatar-related information is provided to store the avatar-related information of the corresponding avatar. The information content included in the avatar-related information is not specifically limited, but may include, for example, information regarding rights, qualifications, etc., acquired by the avatar through avatar actions performed in the metaverse. Furthermore, the avatar-related information may also include action history information similar to that included in the avatar information.

As another alternative, at least one of the avatar identification information and the private key may be stored on a blockchain under the control of the VC management unit 424 provided in the identity management device 400A. When the avatar identification information and the private key are stored in the blockchain, the avatar VC memory unit 433 may be omitted from being arranged.

The explanation will be returned to Fig. 21. The user VC memory unit 434 is formed to store the user identification information (i.e., User VC) for each end user (real user) registered (memorized) in the end-user information memory unit 431. Additionally, the user VC memory unit 434 is formed to store private keys associated with the user identification information (which are a private key corresponding to the issuer DID and a private key corresponding to the user DID).

Fig. 26 shows an example of information (user identification information and private key) stored by the user VC memory unit 434, corresponding to one real user.

As shown in the figure, in the user VC memory unit 434, the user identification information and the private key corresponding to the user DID are stored, in a mutual correspondence manner, for the user VC_ID and user ID. The user VC_ID is an identifier uniquely assigned to the associated user identification information. In this way, the user identification information and private keys are associated with a user ID. Hence, the user identification information and private keys can be managed in association with the user information of the corresponding real user (end user).

The user identification information includes fields for a VC type, an issuer DID, a user DID, and a user-related information.

The field for the user-related information is formed for storage of the user-related information of an associated real user. The information content included in the user-related information is not specifically limited, but may include, for example, information regarding rights or qualifications acquired by the real user based on the results of user's actions in the physical space (such as shopping or moving to a designated location). Additionally, the user-related information may include action history information regarding associated real user's activities in the physical space.

By the way, at least one of the user identification information and the private keys may be stored in the blockchain under the control of the VC management unit 424 provided in the identity management device 400A. In cases where both the user identification information and the private keys are stored in the blockchain, the user VC memory unit 434 may be omitted from being arranged in the system.

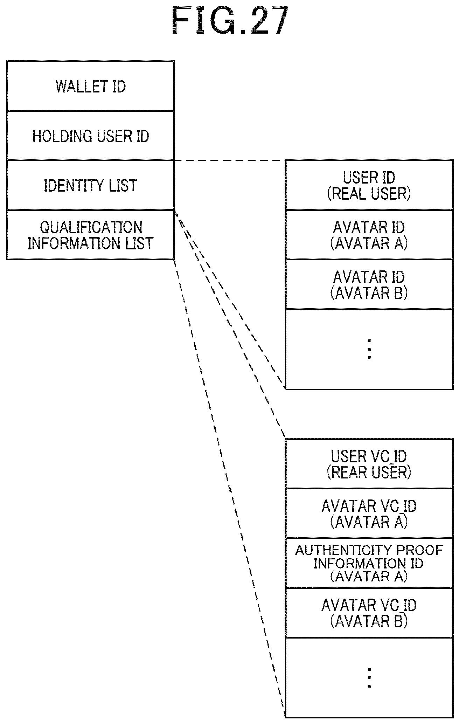

The explanation will be returned to Fig. 21 again. The management information is stored in the wallet management information memory unit 435. The wallet management information associated to one wallet is information that integrates and manages the qualification information of the identities (real user, avatar) associated with each end user. Fig. 27 shows an example of the wallet management information associated with a single wallet. The wallet management information associated with a single wallet has respective fields for a wallet ID, an identity list, and a qualification information list.

The field for the wallet ID is formed to store the wallet ID, which is an identifier uniquely representing the associated wallet.

The field for the identity list is formed to store identity ids (user id and avatar id) that indicate the available identities for the associated wallet.

The field for the qualification information list is formed to store qualification information IDs (user VC_ID, avatar VC_ID, authenticity proof information ID, etc.) for each qualification information item (VC, authenticity proof information, etc.) managed as contents to be included in the associated wallet.

This wallet management information structure enables integrated management of qualification information (authenticity proof information, VC, etc.) assigned to each identity (real user, avatar) corresponding to a single end user. This qualification information is stored within the wallet held by that single end user for the integrated management. Additionally, the qualification information stored in the wallet can be shared among the identities indicated by the identity ids (user id and avatar id) stored in the identity list.

Furthermore, the wallet management information may be stored in the blockchain under the control of the wallet management unit 425 installed in the identity management device 400A. In such a case, the wallet management information memory unit 435 may be omitted from arrangement.

The identity history information memory unit 436 is formed to store identity history information indicating the past actions of each identity (real user or avatar).

Regarding the identity history information, the identity history information memory unit 436 may store, for example, the identity history information of each real user (end user) in association with the identity history information (real user-specific history information) for that real user, and the identity history information (avatar-specific history information) for one or more avatars associated with that real user, in a mutually associated manner.

Regarding the real user individual history information, the controller 402A may acquire information such as website usage history and location information obtained using the end-user terminal 300 operated by the associated end user, and store the collected information, as identity history information, into the identity history information memory unit 436. Additionally, the avatar individual history information may be acquired, for example, by the avatar provision control unit 423 from each service provision system 510. In the metafile (Fig. 24) of avatar information stored by the metafile memory unit 4323, the action history information may be omitted from being processed or may exist separately.

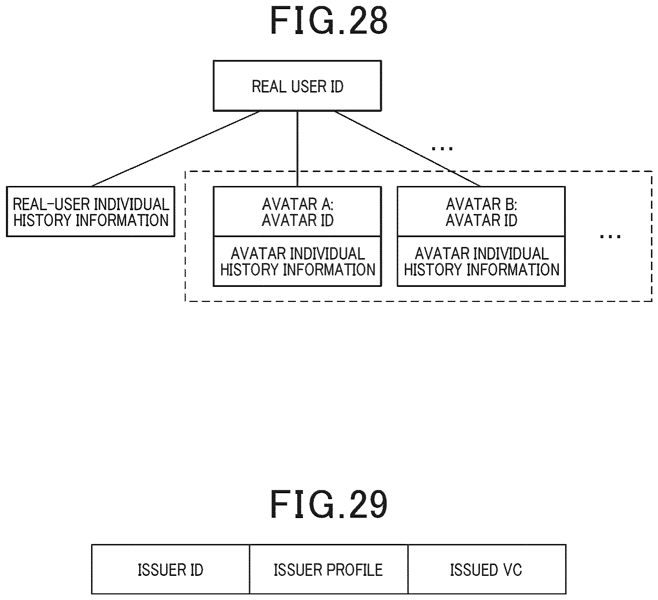

Fig. 28 exemplifies management of identity history information stored by the identity history information memory unit 436 associated with one real user.

As shown in the figure, the identity history information associated with the one real user is managed such that, for the real user ID of the associated real user, both the real-user individual history information and the avatar individual history information for each avatar (avatar A, avatar B, ...) are made to be associated with each other.

By the way, Fig. 28 shows an example where one real-user individual information is associated with each real user, and one avatar individual history information is associated with each avatar. As an alternative, for example, multiple pieces of real-user individual information may be associated with a single real user for each category of action types, and multiple pieces of avatar individual information may be associated with a single avatar.

The explanation will be returned to Fig. 21 again.

The characteristic expression information memory unit 437 is formed to store the characteristic expression information generated by the feature word processing unit 426.

The identity management device 400A may be configured by a single device, or the identity management device 400A may be realized by assigning predetermined functions to multiple devices connected for communication over a network, and in that assigned state, having the multiple devices collaborate to execute the processing.

Additionally, the VC issuance system 600 may store a database concerning issuers (issuer database).

Fig. 29 exemplifies the structure of a record (showing issuer information) stored in the issuer database in association with one issuer. The issuer information in the figure includes fields for an issuer ID, an issuer profile, and an issuance VC.

In the field for the issuer ID, the issuer ID is stored for the associated issuer.

In the field for the issuer profile, an issuer profile is stored. The issuer profile is composed of information indicating the profile of the issuer. As shown in the figure, the issuer profile may include fields for information, such as issuer type and issuer name. The field for the issuer type is provided to store information indicating whether the associated issuer is a public issuer or a private issuer. The field for the issuer name is provided to store the name of the corresponding issuer.

The field for the issuance VC stores information about the identification information issued by the associated issuer.

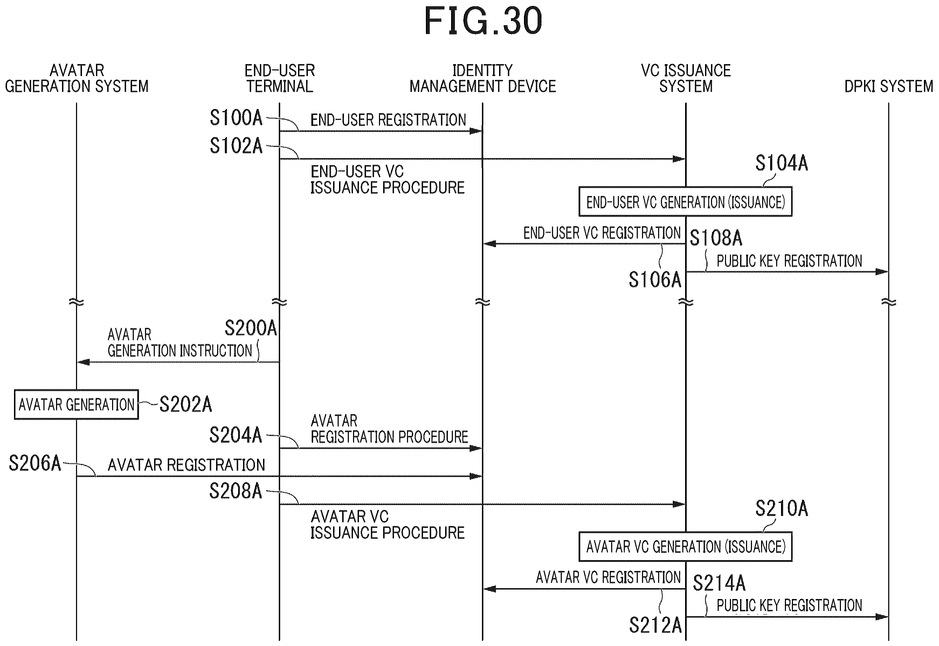

Referring to the sequence diagram in Fig. 30, an example will be explained for the processing steps executed by the identity management system (qualification management system) 1A according to the present embodiment in relation to the registration of an end user (real user). The end-user registration process shown in the sequence allows the end user associated with the avatar to be managed as a real user, who is one of the identities.

Step S 100A: The end user performs the end-user registration procedure by operating their own end-user terminal 300, thereby registering themselves as an end user in the identity management device 400A. During the end-user registration procedure, the end user may input information for specified items, such as the user account and username, to be included in the user profile information.

The identity management device 400A generates the end user information for the associated end user in response to the end-user registration procedure from the end user terminal 300, and stores the generated end-user information in the end-user information memory unit 431.

Step S102A: Furthermore, the end user may perform the procedure for issuing user identification information (user VC) for the user themselves in response to the user registration performed in Step S100A. In this process, the end user accesses the VC issuance system 600 using the end-user terminal 300 and performs the procedure to issue user identification information (user VC) in association with the end user. The end-user terminal 300 executes processing corresponding to the user identification information issuance procedure based on user operations.

As part of the issuance procedure processing, the end-user terminal 300 may send an issuance request to the VC issuance system 600, along with information for predetermined items in the user profile information. The issuance request may also include information specifying the type of user identification information to be issued (e.g., driver's license, passport, insurance card, etc.).

Step S104A: The VC issuance system 600 generates user identification information in response to the issuance request received in Step S102A. In this generation, the VC issuance system 600 generates (issues) a user DID indicating the associated end user and generates a pair of a public key and a private key corresponding to the user DID. Then, the VC issuance system 600 signs (encrypts) the generated user identification information using the private key generated corresponding to the issuer DID indicating an issuing authority with which the user is associated.

Step S106A: The VC issuance system 600 registers the user identification information generated in Step S104A into the identity management device 400A. Specifically, the VC issuance system 600 sends, to the identity management device 400A, the user identification information, which is signed with the private key corresponding to the issuer DID assigned to the corresponding issuing authority, and the private key, which corresponds to the user DID of the corresponding end user. In the identity management device 400A, the VC management unit 424 stores, into the user VC memory unit 434, the user identification information received from the VC issuance system 600 and the private key corresponding to the user DID such that the received user identification information and the private key are associated with an avatar ID corresponding to the avatar.

Step S108A: In addition, in step S104A, the VC issuance system 600 registers, into the DPKI system 700, the public keys (the issuer DID-corresponding private key and the user DID-corresponding public key) generated together with the user identification information.

The issuance of the user identification information in steps S102A to S108A may be performed whenever new issuance of specified user identification information is required after user registration has been completed.

Next, referring to the sequence diagram shown in Fig. 30, an example of the processing steps performed by the identity management system 1A of the present embodiment will be explained in relation to the generation and registration of avatars, and the registration of avatar authentication information.

Step S200A: An end user accesses the avatar generation system 100 by operating their own end-user terminal 300 and performs operations for generating an avatar. Hence, the end-user terminal 300 sends an avatar generation instruction based on the avatar generation operation to the avatar generation system 100.

Step S202A: The avatar generation system executes processing to generate an avatar in response to the avatar generation instruction.

Step S204A: The end user operates the end-user terminal 300 to perform the avatar registration procedure so that the generated avatar is registered in the identity management device 400A. During the avatar registration procedure, the user specifies the avatar to be registered and designates an identity management device 400A serving as the destination for registering the specified avatar.

Step S206A: In response to the avatar registration procedure performed in Step S204A, the avatar generation system 100 and the identity management device 400A cooperatively execute processing associated with the avatar registration.

First, the avatar generation system 100 uploads, to the identity management device 400A, the avatar information of the avatar designated as the registration target through the avatar registration procedure. The avatar registration unit 421 installed in the identity management device 400A stores the uploaded avatar information in the avatar information memory Unit 432.

In addition, in step S206A, the authenticity verification information management unit 422 installed in the identity management device 400A assigns authenticity proof information to the avatar being registered currently. The authenticity proof information is information that proves the authenticity of the avatar itself, which exists in the metaverse or similar environments provided by the service provision system 510. In the present embodiment, the fact that an avatar possesses authenticity means that the avatar is not fake or altered and is legitimate. Examples of illegitimate (unauthorized) avatars include avatars that have been altered, such as when avatar materials like face materials are replaced with fake materials different from the original, or avatars copied without the permission of the creator or other parties holding certain rights to the avatar.

Specifically, the authenticity verification information management unit 422 may perform the following actions as the assignment of authenticity proof information to the target avatar: assigning an electronic watermark (an example of authenticity proof information) and assigning a digital authenticity certificate (an example of authenticity proof information).

The authenticity verification information management unit 422 attaches information unique to the target avatar, such as an avatar ID, as an electronic watermark to the target avatar's object data. The electronic watermark attached to the avatar's object data, as described, may preferably be imperceptible, but may also be perceptible.

Furthermore, the authenticity verification information management unit 422 attaches the digital authenticity certificate to the target avatar.

In this process, the Authenticity verification information management unit 422 may be configured to attach an authenticity certificate to the target avatar, which certifies the creator of the target avatar, the storage location (URL) of the target avatar, the service provision system 510 using the target avatar, and other relevant information.

For example, the authenticity verification information management unit 422 may execute a predetermined transaction with the authenticity certificate issuer (illustration omitted) on the network, thereby causing the issuer to issue an authenticity certificate for the target avatar. Such an authenticity certificate may be managed on the network, for example, by associating the certificate with the avatar ID (an example of information unique to the registered target avatar) of the target avatar.

By way of example, the authenticity certificate that the authenticity verification information management unit 422 assigns to an avatar may be an NFT (Non-Fungible Token) managed on a blockchain. In this process, the authenticity verification information management Unit 422 may be configured to assign the authenticity certificate to the avatar using, for example, an external NFT platform. Additionally, the authenticity verification information management unit 422 may be configured to assign an authenticity certificate generated using quantum-resistant cryptography or a quantum-resistant blockchain to the avatar.

Furthermore, the authenticity certificate assigned by the authenticity verification information management Unit 422 to the avatar may be an SBT (Soulbound Token), which is a non-transferable NFT. In this process, the authenticity verification information management unit 422 may assign the SBT as the authenticity proof information to the avatar instead of the NFT or may assign both the NFT and the SBT to the avatar. When attaching NFT and SBT to an avatar as authenticity proof information, the authenticity verification information management Unit 422 may select and use either the NFT or the SBT to prove the avatar's authenticity, or may use both the NFT and the SBT together.

Furthermore, in step S206A, the authenticity verification information management unit 422 issues a unique authentication code to an avatar being registered currently. The authentication code is a code provided to the service provision system 510, which provides network services using the target avatar, along with the avatar data of the target avatar. The authentication code is used to determine the authenticity of the avatar in response to a request from an end user, as described later.

Since the authentication code is uniquely associated with a target avatar, an avatar ID may be used, for example.

However, when enhancing security against scenarios such as avatars being identified or registration information potentially containing user personal data being identified, it is preferable to use a code generated independently of the avatar ID serving as the authentication code.

The authenticity verification information management unit 422 adds the issued authentication code as one piece of metadata within the metafile stored in the metafile memory unit 4323, associated with the target avatar (Fig. 24).

Step S208A: The end user who created the avatar registered in Step S206A accesses the VC issuance system 600 via the end-user terminal 300 and performs the operations to issue avatar identification information. The end-user terminal 300 executes the issuance procedure processing in response to the user operations.

As part of the issuance procedure, the end-user terminal 300 may send an issuance request to the VC issuance system 600 along with avatar information which is avatar identification information. Furthermore, the issuance request may include information specifying avatar identification information to be issued (i.e., issuance certificate specification information).

As a modification, in response to the issuance request, the VC issuance system 600 may set avatar identification information to be issued to a target avatar.

As another modification, when sending the issuance request, the end-user terminal 300 may temporarily acquire avatar information from the identity management device 400A and transmit the acquired avatar information to the VC issuance system 600. Alternatively, the end-user terminal 300 may specify a target avatar to be sent to the identity management device 400A, causing the identity management device 400A to transmit the avatar information to the VC issuance system 600.

Step S210A: In response to the issuance request from the end-user terminal 300 in Step S208A, the VC issuance system 600 generates avatar identification information that verifies the identity of the avatar based on the avatar information received along with the issuance request in Step S208A. In this process, the VC issuance system 600 generates (issues) an avatar DID indicating the associated avatar and generates a pair of public key and private key associated with the avatar DID. Subsequently to the generation, the VC issuance system 600 signs (encrypts) the generated avatar identification information using the private key, which is generated corresponding to an issuer DID indicating the associated issuing authority.

The VC issuance system 600 may formed to include at least a portion of the received avatar information into the avatar-related information.

Step S212A: The VC issuance system 600 registers the avatar identification information into the identity management device 400A. Specifically, sent to the identity management device 400A is avatar identification information signed with the private key assigned to the issuer DID specifying the associated issuing authority (example of signed identification information) and the private key assigned to the avatar DID of the associated avatar. The VC management unit 424 of the identity management device 400A stores, into the avatar VC memory unit 433, both the avatar identification information received from the VC issuance system 600 and the private key assigned to the avatar DID such that the avatar identification information and the private key are associated with the avatar ID of the avatar to be managed.

Step S214A: Furthermore, the VC issuance system 600 registers, into the DPKI system 700, the public keys (issuer DID-associated public key, avatar DID-associated public key) generated together with the avatar identification information in step S210A.

In the identity management system 1A according to the present embodiment, performing the processing procedure shown in Fig. 29 enables both a real user and an avatar to be registered as identities associated with a single end user. After this registration, qualification information can be assigned (issued) to the identities. To be more specific, a user identification certificate can be assigned (issued) to the real user, while an avatar can be provided with avatar identification information and authenticity proof information.

In addition, the wallet management unit 425 of the identity management device 400A can configure a qualification information wallet WL, in which this wallet stores, in an integrated manner, the qualification information assigned to the identities (real user and avatar) for each end user.

In other words, the wallet management unit 425 assigns one wallet ID to one end user. The wallet management unit 425 generates wallet management information associated with the assigned wallet ID as follows. For example, the wallet management unit 425 stores the identity IDs (user ID and Avatar ID) for each associated identity in the field for the shared ID list in such a manner that the identity IDs are associated with the assigned wallet ID. Moreover, the wallet management unit 425 stores, into the field for the shared qualification information list, the list items of qualification information assigned to the associated identity such that the list items are associated with the assigned wallet ID. In this way, the wallet management unit 425 stores the generated wallet management information into the wallet management information memory unit 435. The shared ID list may store identity IDs specifying some of all the identities associated with the single end user. Additionally, the shared qualification information list may include selected qualification information from among all the pieces of information assigned to each identity associated with the single end user.

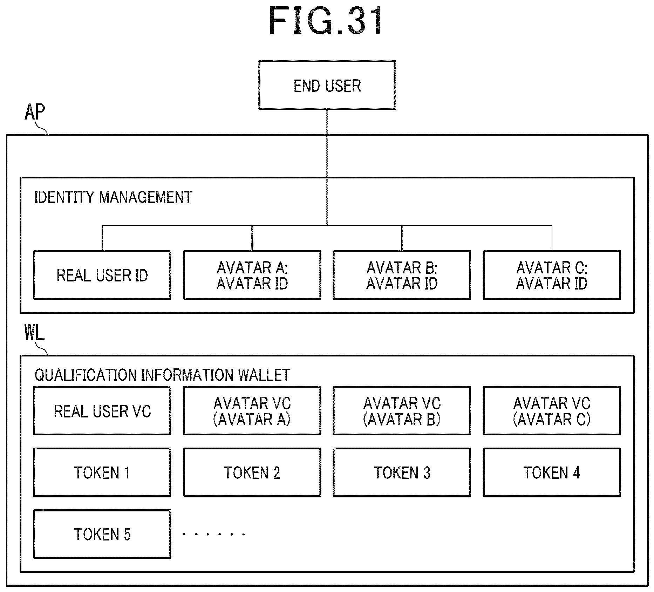

Fig. 31 shows an example of the manner in which identity and qualification information are managed by wallet management information associated with one end-user. The figure illustrates an example of wallet management realized under an avatar management-enabled application installed in the end-user terminal 300.

The figure shows an example where, correspondingly to the end user, a real user and three avatars A, B, and C are registered as identities that can utilize the qualification information wallet WL. In other words, in the shared ID list field for the wallet management information, a user ID of the associated real user and avatar IDs for the three avatars, which are avatar A, avatar B, and avatar C, are stored.

In addition, the qualification information wallet WL associated with the real user and the three avatars A, B, and C holds the user identification information (user VC) assigned to the real user, and the avatar identification information (avatar VC) assigned to each of the avatar A, avatar B, and avatar C. In addition, the qualification information wallet WL in the figure holds authenticity proof information, such as NFTs or SBTs, assigned to any of the avatar A, avatar B, or avatar C, as shown by tokens 1 to token 5, etc. The field for the shared qualification information lists about the corresponding wallet management information stores the identification information (VC) and tokens (authenticity proof information). The tokens may include NFTs or SBTs, such as driver's licenses, membership cards, admission passes indicating permission to enter specific locations, or tickets indicating permission to participate in specific events.

In the present embodiment, associating the qualification information wallet WL with a single end-user makes it possible to manage the qualification information for multiple identities assigned to the single end user in an integrated manner, as explained.

As described above, since the qualification information indicating multiple identities corresponding to one end user can be managed in an integrated manner, the end-user terminal 300 can present, as follows, the identities and qualification information which are assigned to the end user.

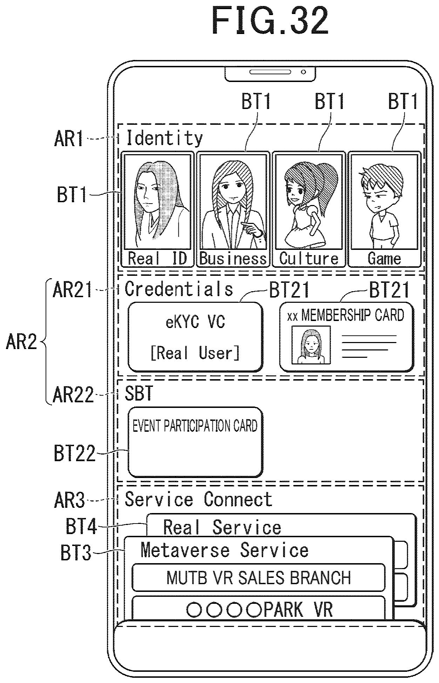

Fig. 32 exemplifies an identity management screen displayed on the display unit of the end-user terminal 300. A web browser implemented in the end-user terminal 300 may access, for example, the web page of the identity management screen provided by the identity management device 400A, whereby the identity management screen shown in the figure can be displayed. Alternatively, the foregoing identity management screen can be displayed by an application which is responsible for the identity management implemented in the end-user terminal 300.

In the identity management screen shown in the figure, an identity selection area AR1, a qualification information selection area AR2, and a service selection area AR3 are arranged.

The identity selection area AR1 is an area where operations to select an identity which is subject to authentication or metaverse entry are performed. In the identity selection area AR1, buttons BT1 indicating, one by one, the real user and multiple avatars are arranged as identities assigned to the end user. In the figure, a button labeled "Real ID" is assigned to the real user, while buttons labeled "Business," "Culture," and "Game" assigned to respective avatars, respectively.

The qualification information selection area AR2 is the area where the operations of selecting qualification information, which are used by the real user for qualification confirmation in the physical space or by the avatars for qualification confirmation in the metaverse, are performed.

The qualification information selection area AR2 includes an identification information (VC) area AR21 and an authenticity proof information area AR22.

The identification information area AR21 is the area where the operations of selecting qualification information serving as identification information are performed. In the identification information area AR21, buttons BT21 assigned to each piece of identification information are arranged as options.

The authenticity proof information area AR22 is the area where the operations of selecting qualification information serving as authenticity proof information are performed. In the authenticity proof information area AR22, a button BT22 assigned to each piece of identification information is arranged as options.

The service selection area AR3 is the area where operations of selecting a service utilized by an indent are performed, in which such a service is selected from services provided in the physical space (real services) and services provided in the metaverse (network services). The real services may include services enabling the use of specified cashless payments, such as payment using credit cards. The service selection area AR3 is arranged with buttons BT3 assigned to respective services.

By using this identity management screen, the end user can enable user's associated identities (real user, or the avatar associated with that real user) to act and utilize various services.

Furthermore, each of the identities (real user and avatar) possesses distinct content and types of identification information (VC) issued by the VC issuance system 600, authenticity proof information (NFT, SBT, etc.), identity history information, wallet data, user-related information, avatar-related information, and other contents. Namely, each identity can be said to possess characteristics as an individual or entity.

Considering that each identity possesses such characteristics, it is desirable to utilize information regarding the characteristics possessed by the identity in both the physical space where the real user acts and the metaverse where the avatar acts.

Therefore, in the identity management system 1A according to the present embodiment, the characteristic expression information can be assigned to each identity as information indicating the identity's characteristics. The characteristic expression information indicates the relationships between multiple words extracted from the identity-specific information. The identity-specific information may include, for example, the aforementioned identification information (VC), authenticity proof information (NFT, SBT, etc.), wallet data, user-related information, avatar-related information, identity history information, and the like. Such identity-specific information can be treated as information indicating the characteristics of the associated identities. Thus, the characteristic expression information represents the traits of the associated identities through words and the relationships between the words.

In the present embodiment, the feature word processing unit 426 of the identity management device 400A can generate characteristic expression information, and store the generated characteristic expression information into the characteristic expression information memory unit 437.

In addition, the feature word processing unit 426 may generate an identity characteristic graph (serving as an example of word relationship display information) that visualizes the characteristic expression information, and the generated identity characteristic graph may be displayed on the end-user terminal 300 or in the metaverse.

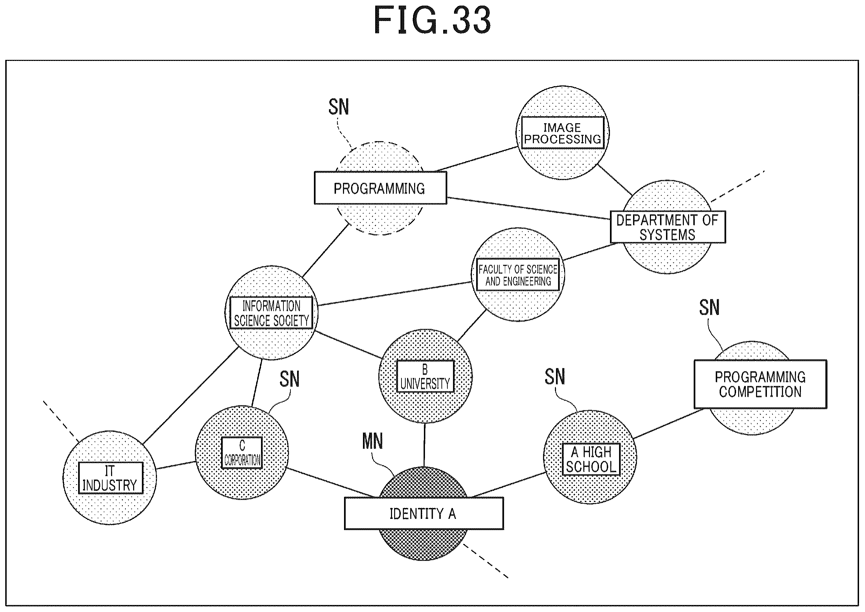

Fig. 33 exemplifies a display mode of the identity characteristic graph based on characteristic expression information generated in association with one identity "A."

The identity characteristic graph shown in this figure provides a structure originating from a main node M associated with a word "identity A," where sub-nodes SN directed to each word related to the main node MN are connected by edges based on the relationships with the main node MN or the relationships between the words.

In the identity characteristic graph, the nodes designated as the main node MN can be arbitrarily changed from among the nodes assigned to each word.

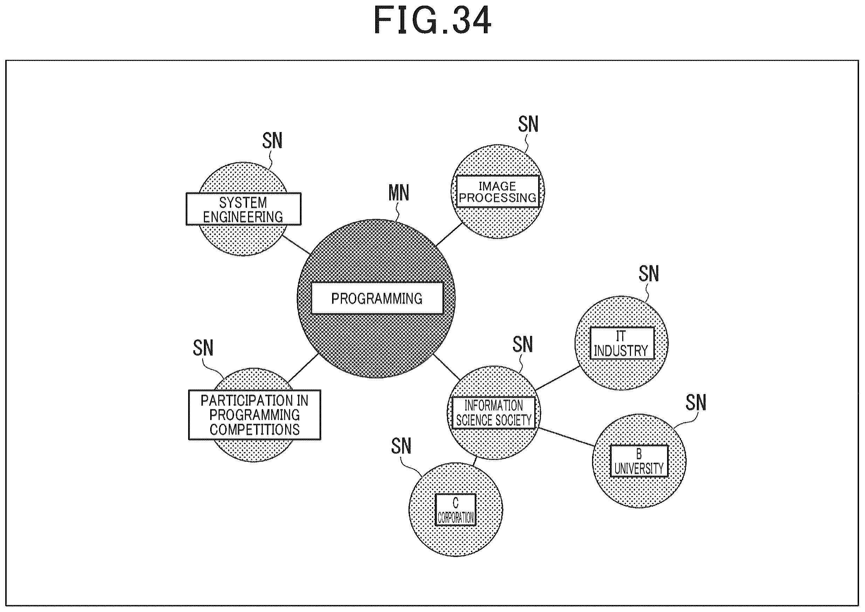

Fig. 34 exemplifies an identity characteristic graph where the sub-node SN directed to the word "programming" has been changed to the main node MN, based on the identity characteristic graph presented in Fig.33. The identity characteristic graph shown in Fig.34 has been modified such that, following the change to the main node MN from that shown in Fig. 33, the connectivity relationships of the nodes originating from the main node MN are also changed for reconstruction.

In the identity characteristic graphs shown in Figs. 33 and 34, the node display may be modified based on factors, such as importance of words. In addition, in the identity characteristic graph, the appearances of edges between or among the nodes, which are such as edge thickness or color, may be modified according to the degree of relationship (connection).

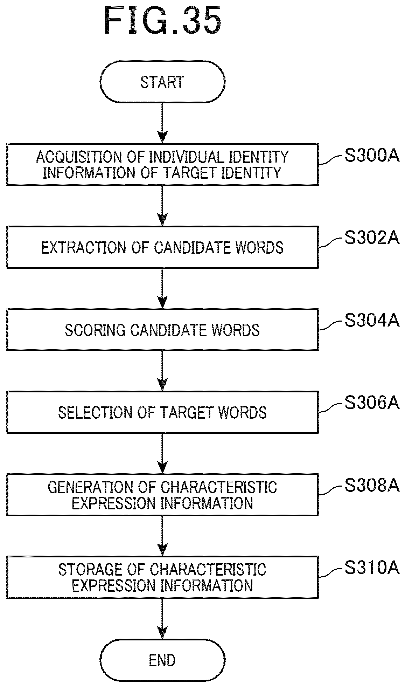

Referring to the flowchart shown in Fig. 35, an example of the processing steps executed by the identity management device 400A in relation to generating characteristic expression information is described. The processing shown in the figure pertains to generating the characteristic expression information for a real user or avatar serving as a single identity.

Step S300A: In the identity management device 400A, the feature word processing unit 426 acquires identity-specific information for a target identity.

When the target identity is a real user, the identity-specific information to be acquired includes the corresponding end-user's user profile information (Fig. 22), user identification information for the real user stored in the user VC memory unit 434 (Fig. 26), authenticity proof information associated with the real user, wallet data, or real-user individual history information stored in the identity history information memory unit 436 (Fig. 28).

Meanwhile, when the target identity is an avatar, the identity-specific information to be acquired includes the information stored in the associated avatar metafile (Fig. 24), user identification information for the target avatar stored in the avatar VC memory unit 433 (Fig. 25), authenticity proof information associated with the target avatar, wallet data, or avatar individual history information stored in the identity history information memory unit 436 (Fig. 28).

Step S302A: The feature word processing unit 426 extracts candidate words to be included in the characteristic expression information from the identity-specific information acquired in step S300A.

Step S304A: The feature word processing unit 426 performs scoring (weighting) for each candidate word extracted in step S302A. The feature word processing unit 426 may perform the scoring for each candidate word based on the candidate word frequency of occurrence, the degree of reliability of the identity-specific information from which the words have been extracted, the degree of co-occurrence between candidate words, and the like.

Step S306A: The feature word processing unit 426 selects words (target words) to be included in the characteristic expression information from among the candidate words based on the scoring results obtained from step S304A.

Step S308A: The feature word processing unit 426 generates characteristic expression information having nodes which are target words selected in step S306A. When generating the characteristic expression information, the feature word processing unit 426 may use the scoring results coming from step S304A to set the relationships (connections) between nodes (words), the connection strengths, the importance of the words themselves, and other elements.

The feature word processing unit 426 may execute the processing described in steps S302A to S308A using AI (artificial intelligence). In this processing, the feature word processing unit 426 may execute processing such as word scoring, word extraction, and association between words using, for example, deep learning or clustering.

Step S310A: The feature word processing unit 426 stores the characteristic expression information generated in step S208A into the characteristic expression information memory unit 437. The characteristic expression information may be structured to store, for example, information such as the strength of relationships with other words per word and the importance of the word itself.

The feature word processing unit 426 may create an identity characteristic graph using the characteristic expression information stored in the characteristic expression information memory unit 437, and control the created identity characteristic graph to be visualized through display in the metaverse provided by the end-user terminal 300 or the service provision system 510.

The identity characteristic graph is not limited to a format such as the co-occurrence network shown in Figs. 33 and 34. The identity characteristic graph may also take a format such as a bar graph showing, for example, the degrees of relationship between or among words relative to a main word or the credibility of each word.

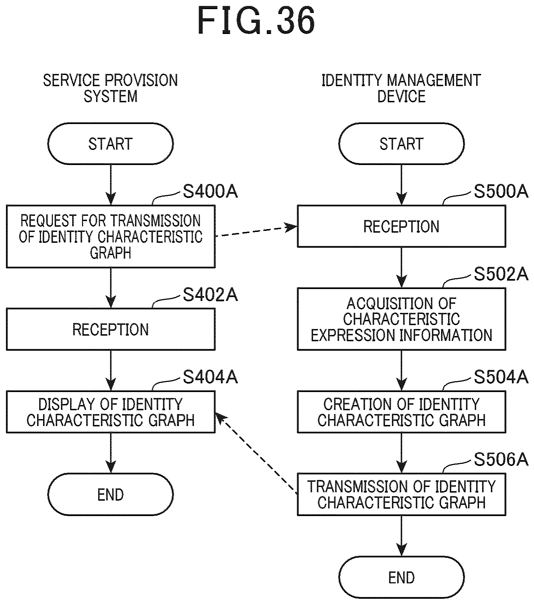

In relation to displaying the identity characteristic graph, the processing procedure performed by both the service provision system 510 and the identity management device 400A will now be described with reference Fig. 36. First, an example of the processing procedure performed by the service provision system 510 will now be described.

Step S400A: For example, when a real user accesses a network service from an end-user terminal 300 or an avatar performs activities in the metaverse, it becomes necessary to display the identity characteristic graph assigned to the real user or avatar. Therefore, the corresponding service provision system 510 sends an identity characteristic graph request to the identity management device 400A. The identity characteristic graph request includes the user ID or avatar ID that identifies a target to be used.

Step S402A: The service provision system 510 receives the identity characteristic graph sent from the identity management device 400A in response to reception of the identity characteristic graph request sent in step S400A.

Step S404A: The service provision system 510 displays the identity characteristic graph received in step S402A on the network service.

An example of the processing steps executed by the identity management device 400A will then be described.

Step S500A: The feature word processing unit 426 installed in the identity management device 400A receives the identity characteristic graph request sent in step S400A.

Step S502A: The feature word processing unit 426 acquires the characteristic expression information for the real user or avatar indicated by the user ID or avatar ID included in the received identity characteristic graph request, from the characteristic expression information memory unit 437.

Step S504A: The feature word processing unit 426 generates an identity characteristic graph using the characteristic expression information acquired in step S502A.

Furthermore, when identity characteristic graphs are compatible with multiple formats and a format is specified by, for example, an identity characteristic graph request, the feature word processing unit 426 is configured to generate an identity characteristic graph in the specified format.

Step S506A: The feature word processing unit 426 transmits the generated identity characteristic graph to the service provision system 510A.

Additionally, the feature word processing unit 426 enables provision, to the metaverse, of the characteristic expression information stored in the characteristic expression information memory unit 437. In the metaverse, the provided characteristic expression information is used for a predetermined purpose.

For example, the characteristic expression information may be used for matching identities. As a practical example of the matching, an identity existing as a company within the metaverse may be used to select an avatar suitable for the company from among job seeker avatars existing within the same metaverse.

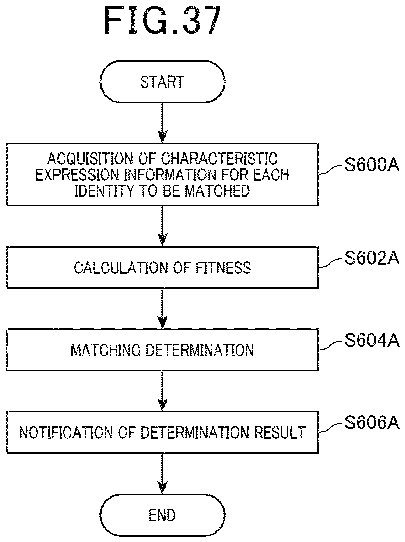

Fig. 37 exemplifies the processing steps executed by the identity management device 400A for the identity matching described. The processing shown in this figure determines the degree of matching with one identity when, for example, a company identity selects a job seeker identity that matches its job openings. In addition, the processing shown in the figure is performed to match companies existing in the metaverse with the avatars.

Step S600A: Company A, existing as one identity within the metaverse, submitted a job posting request to an agent operating within the same metaverse. In response to the job posting request, an agent submitted a request to the identity management device 400A to select an avatar for the company A to hire as an employee. The agent registers information about avatars seeking employment with companies and wishing to match with companies in its talent database.

In the identity management device 400A, the avatar provision control unit 423 responds to the avatar selection request in order to acquire the characteristic expression information of the requesting company and the characteristic expression information of one avatar from among the characteristic expression information of the applicant avatars registered in the agent personnel database.

Step S602A: The avatar provision control unit 423 calculates a fitness between the characteristic expression information of the requesting company and the characteristic expression information of the avatar representing the talent, which are acquired in step S600A. To calculate the fitness, the feature word processing unit 426 may, for example, be configured to calculate a similarity between the characteristic expression information of the requesting company and the characteristic expression information of the avatar representing the applicant.

In this process, the characteristic expression information of the company used in step S602A and the characteristic expression information of the avatar serving as human resources may be based on words considered highly important for the job opening as the main node, rather than words corresponding to the identity as shown in Fig. 33. For example, the characteristic expression information in Fig. 34 can be understood as that provided by the applicant avatar when applying for the job opening. In other words, the characteristic expression information described in Fig. 34 is registered in the human resource database by the applicant avatar with the purpose of highlighting their programming skills.

Step S604A: The feature word processing unit 426 may perform matching determination based on the fitness calculated in step S602A. That is, the feature word processing unit 426 may determine whether it is appropriate for the applicant's avatar to be employed by the requesting company.

The processing in steps S602A and S604A may be performed by the feature word processing unit 426 which employs AI scheme, for example.

Step S606A: The feature word processing unit 426 notifies the result of the determination made in step S604A. In this process, the feature word processing unit 426 may notify both of the requesting company and the applicant's avatar of the determination results, or it may notify both the requesting company and the applicant's avatar of the determination results.

The requesting company may determine whether to hire the applicant's avatar based on the notified determination results. Alternatively, the applicant's avatar may also decide whether to choose the company identified as a match as their place of employment based on the notified judgment result.

As another alternative, the feature word processing unit 426 may determine whether to place the applicant's avatar so as work at the requesting company (i.e., whether a match is established), based on the judgment result from step S604A.

The following describes other examples of characteristic expression information and its usage, which are still possible in the present embodiment. In the present embodiment, the characteristic expression information associated with a single identity may be generated as a single expression that comprehensively indicates the characteristics of the associated identities, or it may be generated as multiple expressions categorized by the characteristics of the associated identities.

In the present embodiment, the feature word processing unit 426 may generate integrated characteristic expression information by integrating the characteristic expression information of multiple identities for which the matching was successful.

A specific example is provided such that, when a marriage is established between two identities through the matching, integrated characteristic expression information combining the characteristic expression information of the two identities may be generated. Such integrated characteristic expression information indicates the overall characteristics of the household composed of the two identities.

Alternatively, in matching an identity as a company with an identity as an applicant, if an identity employed as a staff member exists within the identity as a company, the feature word processing unit 426 may generate integrated characteristic expression information that combines the characteristic expression information of the identity as a company with that of one or more staff member identities. Such integrated characteristic expression information accurately reflects the company's characteristics as they are represented by the employee's characteristics.

In addition, the feature word processing unit 426 may generate integrated characteristic expression information not only based on the identities for which a match was established, but also based on the characteristic expression information of multiple identities previously set as targets for integration.

Still additionally, when generating the integrated characteristic expression information, the feature word processing unit 426 may perform the integration using partial characteristic expression information formed by a subset of words within the characteristic expression information. In this process, when generating the integrated characteristic expression information, the feature word processing unit 426 may combine methods, such as using the characteristic expression information including all words for a specified identity and using partial characteristic expression information for another identity.

Furthermore, when the integrated characteristic expression information is generated by integrating the characteristic expression information of three or more identities, the feature word processing unit 426 may, according to predetermined conditions, select the characteristic expression information of some multiple identities from the integrated characteristic expression information derived from the characteristic expression information of all identities, and reconstruct the integrated characteristic expression information.

One specific example is also provided such that, for integrated characteristic expression information combining the characteristic expression information of all avatars employed as staff members at a company existing within the metaverse, avatars representing staff members of predetermined departments, sales offices, etc., within the company are selected. It is also possible for the feature word processing unit 426 to reconstruct the integrated characteristic expression information using the characteristic expression information of characteristics of selected staff member's avatars from among the characteristic expression information of all staff member avatars. The reconstructed integrated characteristic expression information thus represents the characteristics of the selected department, sales office, etc., in the company.

It is permissible to transfer characteristic expression information between identities. The form of transfer may be sale or purchase, or it may be lending or borrowing.

As a result of characteristic expression information being transferred between or among identities, the contents of the characteristic expression information associated with an identity change, thereby altering the identity's characteristics. Such changes in characteristics enable the assignment of new skills, qualifications, and the like, to identities serving as such avatars.

Furthermore, in the metaverse, an avatar may act using the characteristics of an identity represented by integrated characteristic expression information, acquired by combining the characteristic expression information of other identities with that originally corresponding to itself, as its own characteristics.

This enables avatars in the metaverse to act using newly acquired qualifications. In addition, the avatars in the metaverse will be able to act in ways that express themselves with personalities different from their physical-space counterparts.

The following describes modified examples of the embodiments.

The identity management device 400A may be configured to identify identity elements lacking for a target identity to approach its desired identity profile, based on the content of identity-specific information, for example. Then, the identity management device 400A may provide recommendations to the target identity to enable the acquisition of the identified identity elements.

Specifically, if the goal for the target identity's avatar is to achieve the highest rank in a certain artist's fan club, the identity management device 400A analyzes the corresponding identity-specific information and determines that the number of times the identity had attended the artist's live events is low. In this case, the identity management device 400A can recommend that the target identity actively participate in the artist's live events.

In this case, the goal set for the identity can also be set by the associated end user, or it may be set by the avatar registration unit 421, etc., based on the avatar's activity history indicated by the contents of the corresponding identity-specific information.

Additionally, the identity management device 400A may detect, based on the action history of the avatar indicated by the identity-specific information associated with a single end user, avatars assigned to the single end user and whose activity levels are below a certain threshold or whose activity contents are overlapped with each other. The identity management device 400A may recommend to the end user countermeasures such as deleting the detected avatar's registration or how to handle the avatar's future actions.

Meanwhile, for example, the wallet management unit 425 provided in the identity management device 400A may manage the identities so that asset allocation can be performed based on identity characteristics. A characteristic can be provided in this modification such that the wallet management unit 425 may be used for the derivation, based on the historical information and characteristic expression information of an identity subject asset allocation.

Specifically, there can be provided an example where two avatars, A and B, autonomously act via AI in response to one end user, the avatars A and B are instructed to operate in the metaverse to manage the assets of their respective associated end users. In this example, the avatars A and B have developed distinct investment tendencies based on their past investment experiences. For example, the avatar A excels at high-risk, high-return investments, while the avatar B tends to invest by steadily accumulating funds. Therefore, the wallet management unit 425 of the identity management device 400A may determine the amount for each of the avatars A and B who use, for investment, the assets held by the end user, based on the investment tendencies of avatars A and B, to ensure the most efficient investment occurs. In determining such investment amounts, the wallet management unit 425 may use a trained model that has learned the relationship between past investment amount decisions for the avatars and the investment effectiveness of the avatars. Furthermore, the wallet management unit 425 may be configured to manage the investment amounts that the end user has decided and allocated to the respective avatars.

Additionally, the avatar provision control unit 423 installed in the identity management device 400A may determine the preferred space (location, country, etc.) and time for a target identity to actively engage based on the target identity's action history and characteristic expression information. In this case, the avatar provision control unit 423 may perform the determination not only for identities as avatars but also for identities as real users.

For example, there is an example where the target identity is an AI avatar performing entertainment activities in the metaverse. In this example, the avatar provision control unit 423 may determine the subject identity's activity location and activity time based on factors such as the number of participating fans and the status of fan reactions indicated by the subject identity's action history, and the subject identity's personality setting (character setting) as an entertainer indicated by the subject identity's characteristic expression information. The avatar provision control unit 423 may propose the determined activity location and activity time to the target identity, which is an AI avatar. Alternatively, the avatar provision control unit 423 may control the target identity to perform activities based on the determined activity location and activity time. Alternatively, such determination of activity location and activity time may be performed for multiple identities, for example, when performing entertainment activities as a group. By making identities act based on these determined activity locations and times, the identities can mobilize large audiences for live events or discover new meaningful activity locations.

Furthermore, in the physical space, individuals may alter the traits and personality they express depending on the person they are communicating with. For instance, an individual might present different traits or personalities when communicating with friends versus when interacting with business associates.

In this situation, while maintaining fundamental core traits of their identity, individuals may adapt the traits they present to align with the identity of the person they are communicating with.

This control, which modifies the characteristics of the subject's identity according to the identity of the communication partner, can be implemented. In this case, the control is performed, for example, by having the feature word processing unit 426 refer to the characteristic expression information and action history of the identity as the communication partner within the metaverse. The feature word processing unit 426 determines the characteristics expressed by the target identity based on the content of the characteristic expression information and action history of the referenced identity as a communication partner. Such determination of characteristics may utilize a pre-trained model that has learned characteristics suitable for the content of the characteristic expression information and action history of the identity as a communication partner. The feature word processing unit 426 generates characteristic expression information (adaptive characteristic expression information) that expresses the determined characteristics, utilizing the characteristic expression information inherently possessed by the target identity. The avatar provision control unit 423 may control the avatar representing the target identity to perform actions, utterances, etc., corresponding to the characteristics indicated by the generated adaptive characteristic expression information. Furthermore, altering identity characteristics based on such adaptive characteristic expression information may also be applied to communication between real users. In this case, the feature word processing unit 426 may determine the characteristics that the target real user should express by referencing the characteristic expression information and action history of the communication partner as a real user. The unit 426 may then propose to the target real user how the real user should behave based on the determined characteristics.

Furthermore, by storing the qualification information corresponding to one end user in the qualification information wallet WL as shown in Fig. 31, it becomes easy to arbitrarily associate qualification information with the identity (real user, avatar) associated with the end user. As a result, qualification information assigned to each identity associated with an end user can be shared and utilized across identities.

In the foregoing embodiment, an example has been given where identities (real user and avatar) exist correspondingly to one end user. However, in the present embodiment, it is possible to have an avatar that can associated with a large number of specific or unspecified end users.

In such a case, the avatar provision control unit 423 may be configured to enable voluntary actions associated with all or some of the large number of end users. Furthermore, in this case, the avatar provision control unit 423 may be configured to enable the avatar to act in response to avatar operations performed based on the collective intent of multiple end users or avatar operations performed by some end users.

In such cases, the qualification information wallet WL, which stores qualification information for multiple real users associated with multiple end users, and the qualification information for a predetermined number of avatars, may be managed to correspond to multiple end users.

In the present embodiment, the end users need not be limited to individuals. In the present embodiment, the end users may also be organizations or groups, such as companies or associations.

It is noted that the identity management system 1A according to the embodiment is not limited to the configuration shown in the foregoing embodiments. For example, the predetermined functional components shown in Fig. 21 for the identity management device 400A may be provided by the end-user terminal 300. For example, by having the end-user terminal 300 possess functions such as the wallet management unit 425 and wallet management information memory unit 435 related to the qualification information wallet WL, the associated end-user's qualification information can be managed collectively at the end-user terminal 300.

By the way, programs for realizing the functions of the aforementioned avatar generation system 100, end-user terminal 300, identity management device 400a, service provision system 510, VC issuance system 600, and DPKI system 700, etc., may be recorded on a computer-readable recording medium. This recording medium having the programs may be loaded into a computer system for execution thereof. This enables the computer system to perform the functional processing of the avatar generation system 100, end-user terminal 300, identity management device 400a, service provision system 510, VC issuance system 600, DPKI system 700, and others. In the present embodiment, the definition of wording "loading a program recorded on a recording medium into a computer system for execution" includes installing the program on the computer system. The term "computer system" as used herein refers to hardware such as operating systems and peripheral devices. Moreover, the term "computer system" may include multiple computer devices connected via networks including communication lines such as Internet, WAN, LAN, and/or dedicated lines. In addition, the wording "computer-readable recording medium" refers to portable media such as floppy disks, optical magnetic disks, ROM, CD-ROM, etc., as well as storage devices such as HDD and SSD that are built into computer systems. The foregoing recording medium that stores therein programs may be a non-transitory recording medium, such as a CD-ROM. In addition, the recording medium includes internal or external recording medium accessible from a distribution server for the purpose of distributing the programs. Program codes stored in the recording media of the distribution server may be different from program codes written in a form executable by the terminal device. Namely, as long as the programs can be downloaded from the distribution server and installed in a form that can be executed on the terminal devices, the formats in which the program codes are stored in the distribution server are not limited to specific ones. Alternatively, it is possible to divide the program into multiple parts, download such divided program parts at different times, and then combine the divided program parts on the terminal device, or to use different distribution servers to distribute each of the divided parts of the program. Moreover, the term "computer-readable recording medium" shall include media that retain programs for a certain period of time, such as volatile memory (RAM) installed within a computer system that functions as a server or client in a configuration in which programs are sent via a network. In addition, the foregoing program may be for the purpose of realizing some of the functions described above. Furthermore, the foregoing functions can be realized by using files (programs) combined with programs already recorded in the computer system, in which such files (programs) are referred to as difference files (difference programs).

### <Additional notes>

(1) A one mode of the present embodiment relates to an identity management system including: a memory unit storing identity-specific information, the identity-specific information being associated with an identity serving as a real user in a physical space and an identity serving as an avatar existing in a metaverse, the identity-specific information being associated with the identities to be specific thereto; and a feature word processing unit, wherein, based on contents of the identity-specific information stored in the memory unit, the feature word processing unit extracts feature words and determines a relationship between or among the feature words, and generates feature-word relationship information indicating the determined relationship, for each of the identities.
(2) The one mode of the present embodiment relates to the identity management system according to the additional note (1), wherein the feature word processing unit may perform scoring of the feature words based on the identity-specific information when extracting the feature words.
(3) The one mode of the present embodiment relates to the identity management system according to the additional note (1) or (2), wherein the feature word processing unit may generate feature-word relationship display information capable of visualizing and presenting the relationship between or among the feature words indicated by the feature-word relationship information.
(4) The one mode of the present embodiment relates to the identity management system according to the additional note (3), wherein the feature word processing unit may display feature word scoring results in a predetermined manner on the feature-word relationship display information.
(5) The one mode of the present embodiment relates to the identity management system according to any one of the additional notes (1) to (4), wherein the feature word processing unit may generate multiple feature-word relationship information corresponding to different characteristics of the respective identities each corresponding to one of the identities.
(6) The one mode of the present embodiment relates to the identity management system according to any one of the additional notes (1) to (5), wherein the feature word processing unit may generate integrated feature-word relationship information by integrating multiple pieces of the feature-word relationship information.
(7) The one mode of the present embodiment relates to the identity management system according to the additional note (6), wherein the feature word processing unit may reconstruct the integrated feature-word relationship information based on a plurality of pieces of the feature-word relationship information, which are partly selected from the plurality of pieces of feature-word relationship information used for generating the integrated feature-word relationship information.
(8) The one mode of the present embodiment relates to the identity management system according to the additional notes (1) to (7), wherein the identity management system may further include a matching unit that determines whether to match multiple identities, based on a similarity of the feature-word relationship information for each of the multiple identities designated as matching targets.
(9) The one mode of the present embodiment relates to the identity management system according to the additional note (8), wherein the feature word processing unit may generate integrated feature-word relationship information by integrating the feature-word relationship information for each identity matched by the matching unit.
(10) Another mode of the present embodiment relates to an identity management method, wherein a feature word processing unit includes a feature word processing step, identity-specific information is stored in a memory unit,
   wherein, based on contents of the identity-specific information stored in the memory unit, the identity-specific information being associated with an identity serving as a real user in a physical space and an identity serving as an avatar existing in a metaverse, the identity-specific information being associated with the identities to be specific thereto, the feature word processing step extracts feature words and determines a relationship between or among the feature words, and generates feature-word relationship information indicating the determined relationship, for each of the identities.
(11) Another mode of the present embodiment relates to a program enabling a computer equipped with an identity management system to function as a feature word processing unit,
   wherein identity-specific information is stored in a memory unit, and, based on contents of the identity-specific information, the identity-specific information being associated with an identity serving as a real user in a physical space and an identity serving as an avatar existing in a metaverse, the identity-specific information being associated with the identities to be specific thereto, the feature word processing unit extracts feature words and determines a relationship between or among the feature words, and generates feature-word relationship information indicating the determined relationship, for each of the identities.
(12) Another mode of the present embodiment relates to a no-volatile recording medium in which a program for a computer provided in an identity management system, the program enabling the computer to function as a feature word processing unit,
   wherein identity-specific information is stored in a memory unit, and, based on contents of the identity-specific information, the identity-specific information being associated with an identity serving as a real user in a physical space and an identity serving as an avatar existing in a metaverse, the identity-specific information being associated with the identities to be specific thereto, the feature word processing unit extracts feature words and determines a relationship between or among the feature words, and generates feature-word relationship information indicating the determined relationship, for each of the identities.

### Industrial Applicability

According to the present invention, the management of identity-related qualifications becomes more efficient, thus enabling the effective utilization of the characteristics possessed by identities in operational domains thereof.

### Partial Reference Signs List

1, 1A: Identity management system
2: Avatar management system
100: Avatar generation system
110: Avatar material provision system
120: Integrated system
200: User interface environment
300: End-user terminal
400: Avatar management device
400A: Identity management device
401: Communication unit
402, 402A: Control unit
403, 403A: Memory unit
421: Avatar registration unit
422: Authenticity verification information management unit
423: Avatar provision control unit
424: VC management unit
425: Wallet management unit
431: End-user information memory unit
432: Avatar information memory unit
433: Avatar VC memory unit
434: User VC memory unit
435: Wallet management information memory unit
500: Network service environment
510: Service provision system
600: VC issuance system
700: DPKI system

## Claims

1. An identity management system comprising:
a qualification management unit that stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user and the user has a predetermined qualification; and one or more pieces of qualification information being assigned to an identity serving as an avatar which is allowed to exist in a metaverse and corresponds to the real user.

2. The identity management system according to claim 1, wherein the qualification information includes identification information that proves a status of the identity.

3. The identity management system according to claim 1 or 2, wherein the qualification information includes authenticity proof information that proves authenticity of the identity.

4. The identity management system according to any one of claims 1 to 3, wherein the qualification management unit outputs qualification information serving as information for confirming an identity to be confirmed, the qualification information being selected from the qualification information stored in the memory unit, based on an operation performed by the real user on a corresponding user terminal.

5. An identity management method performed in an identity management system, the method comprising:
a qualification management step, wherein
a qualification management unit stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user and the user has a predetermined qualification; and one or more pieces of qualification information being assigned to an identity serving as an avatar which is allowed to exist in a metaverse and corresponds to the real user.

6. A program performed by a computer installed in an identity management system, wherein
the computer functions as a qualification management unit that stores a predetermined plurality of pieces of qualification information into a memory unit such that the predetermined plurality of pieces of qualification information are made to correspond to a single information storage medium owned by a real user existing in a physical space, the predetermined plurality of pieces of qualification information being among: one or more pieces of qualification information being assigned to an identity serving as the real user and the user has a predetermined qualification; and one or more pieces of qualification information being assigned to an identity serving as an avatar which is allowed to exist in a metaverse and corresponds to the real user.

7. An identity management system comprising:
a storage unit that stores identity-specific information, the identity-specific information corresponding to an identity of a real user existing in a physical space and an identity of an avatar that is allowed to exist in a metaverse, the identity-specific information being specific to the identities, and
a feature word processing unit that, based on a content of the identity-specific information stored in the memory unit, identity by identity, extracts feature words, identifies a relationship between the feature words, and generates a feature-word relationship information indicating the identified relationship.

8. The identity management system according to claim 7, wherein the feature word processing unit performs scoring of the feature words based on the identity-specific information when extracting the feature word.

9. The identity management system according to claim 7 or 8, wherein the feature word processing unit generates feature-word relationship display information for visualizing and presenting a relationship between the feature words indicated by the feature-word relationship information.

10. The identity management system according to claim 9, wherein the feature word processing unit processes a result of the scoring of the feature words such that the result of the scoring is shown in a predetermined mode in the feature-word relationship display information.

11. The identity management system according to any one of claims 7 to 10, wherein the feature word processing unit generates, for each identity, a plurality of pieces of feature-word relationship information corresponding to characteristics of the respective identities which are different from each other.

12. The identity management system according to any one of claims 7 to 11, wherein the feature word processing unit generates integrated feature-word relationship information which is made by integrating a plurality of pieces of feature-word relationship information.

13. The identity management system according to claim 12, wherein the feature word processing unit reconstructs an integrated feature-word relationship information from a plurality of pieces of feature-word relationship information which is partly selected from the plurality of pieces of feature-word relationship information which are used to generate the integrated feature-word relationship information.

14. The identity management system according to any one of claims 7 to 13, further comprising a matching unit which determines matching of the plurality of identities, based on a similarity condition provided by the feature-word relationship information assigned to every plurality of identities that have been matched.

15. The identity management system according to claim 14, wherein the feature word processing unit generates the integrated feature-word relationship information which is provided by integrating the feature-word relationship information, for every identity matched by the matching unit.

16. An identity management method performed in an identity management system, wherein a feature word processing unit comprises a feature word processing step, wherein
the feature word processing unit performs, for each identity, extraction of feature words and determination of a relationship between the feature words and generates feature-word relationship information indicating the determined relationship, based on a content of an identity-specific information stored in a memory unit, the identity-specific information corresponding and being specific to the identities which correspond to both an identity serving as a real user who exists in a physical space and an identity serving as an avatar which is allowed to exist in a metaverse.

17. A program enabling a computer installed in an identity management system as a feature word processing unit, wherein the feature word processing unit performs, for each identity, extraction of feature words and determination of a relationship between the feature words and generates feature-word relationship information indicating the determined relationship, based on a content of an identity-specific information stored in a memory unit, the identity-specific information corresponding and being specific to the identities which correspond to both an identity serving as a real user who exists in a physical space and an identity serving as an avatar which is allowed to exist in a metaverse.
